# EUROPEAN PATENT APPLICATION

(11) **EP 2 415 594 A1**
(43) Date of publication of application: **08.02.2012**
(21) Application number: 10758290.0
(22) Date of filing: 31.03.2010
(51) Int. Cl.: B32B 15/04, B05D 5/06, B32B 27/18, B32B 33/00

(54) **DECORATIVE MEMBER**

(30) Priority: 31.03.2009 JP 2009088243; 31.03.2009 JP 2009088244
(71) Applicant: Fujikura, Ltd., Tokyo 135-8512 (JP)
(72) Inventor: SANO, Akira, Sakura-shi Chiba 285-8550 (JP); KIMURA, Kazuhito, Sakura-shi Chiba 285-8550 (JP)
(74) Representative: Cabinet Plasseraud
(86) International application number: PCT/JP2010/002386
(87) International publication number: WO 2010/113511

(57) **Abstract**

A decorative member includes a base material, a metal vapor-deposited film that is provided on the base material; and a light scattering transparent film that is provided on the metal vapor-deposited film, in which two or more types of fillers having light transmissive properties and light scattering properties are dispersed within the light scattering transparent film, and the dispersion amount of the fillers in the light scattering transparent film is 0.2 to 4.0% by mass.

## Description

### TECHNICAL FIELD

The present invention relates to a decorative member having excellent decorative effects that is mainly applicable for the main body of a digital consumer product such as a digital still camera and a digital video camera.
Priority is claimed on Japanese Patent Application No. 2009-088243, filed March 31, 2009, and Japanese Patent Application No. 2009-088244, filed March 31, 2009, the contents of which are incorporated herein by reference.

### BACKGROUND ART

In recent years, a so called "luminous body" that imparts mat feeling to the surface of a plastic molded article has been employed as a decorative member that is used as a member that constitutes a portion or the entirety of the main body of a digital consumer product such as a digital still camera and a digital video camera.
In general, paint for creating texture effects (hereinbelow referred to as a "texturing paint") is applied to the surface of the plastic molded article in order to impart a high-class look to the decorative member mentioned above.

As such a kind of decorative member, reflector and extension bering a component of an automobile have been disclosed that suppress gloss and impart a high-class look by forming a vapor-deposited film on the surface of the molded article that is formed using a filler-containing resin (for example, refer to Patent Document 1).
Meanwhile, an optical reflector has been disclosed that attaches a polyolefin-based resin film containing a filler to a metal surface and suppresses luminance unbalance (for example, refer to Patent Document 2).
Further, there is disclosed a method for forming a low-gloss film by applying a coating material containing a combination of a filler and a metal pigment to a base film that is provided on a base layer such as an aluminum wheel for an automobile (for example, refer to Patent Document 3).

### PRIOR ART DOCUMENTS

### PATENT DOCUMENTS

[Patent Document 1] Japanese Unexamined Patent Application, First Publication No. 2008-071556
[Patent Document 2] Japanese Unexamined Patent Application, First Publication No. 2004-167820
[Patent Document 3] Japanese Unexamined Patent Application, First Publication No. 2002-080791

### DISCLOSURE OF INVENTION

### PROBLEMS TO BE SOLVED BY THE INVENTION

However, even if a textured paint is applied by simply applying a coating material that contains a mat flux to the surface of a plastic molded article, there has been the problem of a mat feeling not being obtained depending on the properties of mat fluxes used.
Additionally, in order to obtain a "luminous body" having a mat feeling, a plating is performed or a metal vapor-deposited film is provided on the surface of a plastic molded article, and a film is provided on a plating layer or metal vapor-deposited film by applying a coating material containing a mat flux thereon in order to further give a high-class look. However, since an ultraviolet curable resin is used as the base compound of the coating material, if the mat flux has a high concealing property, insufficient curing of the coating material occurs, which as a result causes a lowering in the surface hardness of the film, a degradation of the wear resistance of the film, and a lowering in the adhesiveness of the film to the base.

The present invention was achieved in view of the above circumstances, and the object thereof is to provide a decorative member that exudes a high-class look, has a metallic external appearance with a good texture, and has excellent perspiration resistance.

### MEANS FOR SOLVING THE PROBLEMS

The decorative member according to an aspect of the present invention includes: a base material; a metal vapor-deposited film that is provided on the base material; and a light scattering transparent film that is provided on the metal vapor-deposited film, wherein two or more types of fillers having light transmissive properties and light scattering properties are dispersed within the light scattering transparent film, and the dispersion amount of the fillers in the light scattering transparent film is 0.2 to 4.0% by mass.

It is preferable that the two or more types of fillers having light transmissive properties and light scattering properties are a mixture of two or more types among scaly talc, fibrous silica, spherical zeolite, mica, and fibrous aluminosilicate.

It is preferable that the 60-degree relative-specular glossiness, converted to gloss units, is 40 to 400.

It is preferable that the film thickness of the light scattering transparent film is 3 to 15 µm.

It is preferable that the decorative member further comprise a transparent film between the metal vapor-deposited film and the light scattering transparent film, or on the light scattering transparent film.

### EFFECTS OF THE INVENTION

Based on the decorative member according to the aspect of the aforementioned invention, since the decorative member includes a metal vapor-deposited film that is provided on the base material, and a light scattering transparent film that is provided on the metal vapor-deposited film, and since two or more types of fillers having light transmissive properties and light scattering properties are dispersed within the light scattering transparent film, that is, fillers with different shapes and refractive indices are mixed in the light scattering transparent film, these fillers are randomly oriented without aligning in a uniform direction. For that reason, light that has entered the upper surface of the light scattering transparent film is refracted by the fillers in the light scattering transparent film, and is scattered in all directions. The scattered light is reflected by the metal vapor-deposited film, and that reflected light is scattered in all directions by the fillers in the light scattering transparent film, and again emitted to the outside through the light scattering transparent film. In addition, since two or more types of fillers are mixed together, aggregation between the same filler particles decreases, and the fillers are dispersed throughout the light scattering transparent film. Moreover, since the dispersion amount of the fillers in the light scattering transparent film is 0.2% to 4.0% by mass ratio, the fillers are substantially uniformly dispersed throughout the light scattering transparent film. Therefore, the light is scattered uniformly, and the desired uniform mat feeling (high-class look) is obtained even when viewed from any direction. Accordingly, the decorative member with a beautiful appearance having a metallic tone with a good texture, exuding a high-class look with a delustered state and appropriate mat feeling is obtained, and not merely a glittering luster such as a metallic luster.

Further, in the case of a transparent film being further provided between the metal vapor-deposited film and the light scattering transparent film, or on the light scattering transparent film, perspiration resistance improves due to the transparent film having excellent perspiration resistance.

### BRIEF DESCRIPTION OF THE DRAWINGS

FIG. 1 is a schematic sectional view that shows the decorative member according to the first embodiment of the present invention.
FIG. 2 is a schematic view that shows the principle of scattering of light by a filler, in the light scattering transparent film constituting the decorative member according to the embodiment.
FIG. 3 is a schematic sectional view that shows the method of manufacturing the decorative member according to the embodiment.
FIG. 4 is a schematic sectional view that shows the method of manufacturing the decorative member according to the embodiment.
FIG. 5 is a schematic sectional view that shows the method of manufacturing the decorative member according to the embodiment.
FIG. 6 is a schematic sectional view that shows the method of manufacturing the decorative member according to the embodiment.
FIG. 7 is a schematic sectional view that shows the decorative member according to the second embodiment of the present invention.
FIG. 8 is a schematic view that shows the principle of scattering of light by a filler, in the light scattering transparent film that constitutes the decorative member according to the embodiment.
FIG. 9 is a schematic sectional view that shows the method of manufacturing the decorative member according to the embodiment.
FIG. 10 is a schematic sectional view that shows the method of manufacturing the decorative member according to the embodiment.
FIG. 11 is a schematic sectional view that shows the method of manufacturing the decorative member according to the embodiment.
FIG. 12 is a schematic sectional view that shows the method of manufacturing the decorative member according to the embodiment.
FIG. 13 is a schematic sectional view that shows the method of manufacturing the decorative member according to the embodiment.
FIG. 14 is a schematic sectional view that shows the method of manufacturing the decorative member according to the third embodiment of the present invention.

### EMBODIMENTS FOR CARRYING OUT THE INVENTION

Hereinbelow, embodiments of the present invention shall be described.
Note that the following embodiments are described in detail in order to better understand the gist of the present invention, and unless otherwise stated, do not serve to limit the present invention.

### (1) First Embodiment

### "Decorative Member"

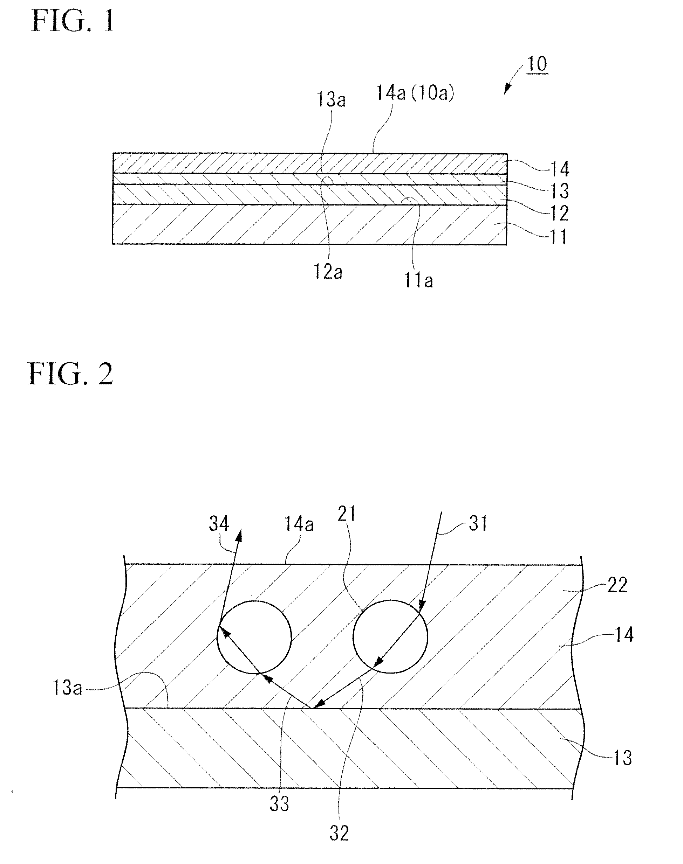

FIG. 1 is a schematic sectional view that shows the decorative member according to the first embodiment of the present invention.
The decorative member 10 of the embodiment is provided with a base material 11, and an undercoat film 12, a metal vapor-deposited film 13, and a light scattering transparent film 14 that are provided in this order on a first surface 11a of the base material 11.
The decorative member 10 is used as a member that constitutes a portion or the entirety of the main body of a digital household electrical product such as a digital still camera and a digital video camera, and the light scattering transparent film 14 is arranged at the outermost surface.

That is to say, the metal vapor-deposited film 13 is provided on the surface (hereinbelow referred to as the "first surface") 12a of the undercoat film 12 being opposite to the surface that is in contact with the base material 11.
In addition, the light scattering transparent film 14 is provided on the surface (hereinbelow referred to as the "first surface") 13a of the metal vapor-deposited film 13 being opposite to the surface that is in contact with the undercoat film 12.

The base material 11 is not particularly limited, and examples include a plastic molding article in which a resin such as polyethylene (PE), polyethylene terephthalate (PET), polyvinyl chloride (PVC), polyvinylidene chloride (PVDC), polylactic acid (PLA), polypropylene (PP), polyamide (PA), polycarbonate (PC), polytetrafluoroethylene (PTFE), polyurethane (PU), polystyrene (PS), polyacetal (POM), acrylonitrile butadiene styrene copolymer (ABS resin), or acrylate resin (PMMA) is formed in an arbitrary shape by a molding method including extrusion molding or injection molding method, and a metal molding article in which a metal such as aluminum or stainless steel is formed in an arbitrary shape by an arbitrary molding method. For the base material 11, it is preferable to use an inexpensive plastic molding article that has excellent strength and workability.

In surface texturing in a plastic molded article, various kinds of patterns that are formed in the inner surface of a metal mold (the surface that makes contact with resin) used when extrusion molding or injection molding the above kinds of resin are transferred to the surface of the plastic molded article.
A pattern that it is formed on the surface of a plastic molded article by surface texturing includes a leather pattern, a wood grain pattern, a rock pattern, a grain pattern, a satin pattern, a geometrical pattern, and the like.

The undercoat film 12 is not particularly limited, and for example includes an acrylic resin, a urethane resin, an epoxy resin, a vinyl resin, and the like. In greater detail, the undercoat film 12 is a resin layer that is formed by hardening a coating material containing the aforementioned resin that is applied to the first surface 11a of the base material 11. It is preferable to use an acrylic resin or a urethane resin for the undercoat film 12 since they have excellent adhesion, water resistance, and durability.
Specifically, an ultraviolet curable coating material: VB3025U (trade name, made by Fujikura Kasei Co.) is used for the acrylic resin coating material, for example.
For the urethane resin coating material, specifically a thermosetting coating material: VB8600L (trade name, made by Fujikura Kasei Co.) is used, for example.
VB3025U includes ethyl acetate 20 to 30% by mass, and propylene glycol monomethyl ether 20 to 30% by mass.
VB8600L includes ethylene glycol monobutyl ether 10 to 20% by mass, and hydrocarbons 10 to 20% by mass.

An additive may be contained in the coating material.
As an additive, a crosslinking accelerator or the like is used and, specifically, AD2986D (trade name, made by Fujikura Kasei Co.) is used, for example.

The thickness of the undercoat film 12 is preferably 5 µm or more and 15 µm or less, and more preferably 8 µm or more and 12 µm or less.
The undercoat film 12 is provided for surface preparation of the first surface 11a of the base material 11 that serves as the foundation of the middle coat layer 14. That is, in order to level the unevenness resulting from irregularities of the first surface 11a of the base material 11, the undercoat film 12 is provided. Therefore, if the thickness of the undercoat film 12 is within the aforementioned range, even if the first surface 11a of the base material 11 has irregularities, the undercoat film 12 will absorb the irregularities and the first surface 12a of the undercoat film 12 will turn into an even surface. Moreover, if the thickness of the undercoat film 12 is less than 5 µm, the undercoat film 12 may not be able to absorb irregularities in the first surface 11a of the base material 11. On the other hand, even if the thickness of the undercoat film 12 exceeds 15 µm, a greater effect may not be acquired.

The metal vapor-deposited film 13 is formed by a vapor deposition method, and is constituted from: one type selected from the group of base metals, such as tin (Sn), aluminum (Al); and indium (In), and its oxide. In greater detail, the metal vapor-deposited film 13 is a layer that includes: one type selected from the group of base metals, such as high-purity tin (Sn), aluminum (Al), and indium (In), as a main component; and its oxide as an impurity.

The thickness of the metal vapor-deposited film 13 is preferably 100 nm or more and 300 nm or less, and more preferably 150 nm or more and 250 nm or less. It is preferable that the metal vapor-deposited film 13 be a non-conductive film that is provided in order to prevent electrostatic discharge damage caused by static electricity of the human body affecting circuits in the device to which the decorative member 10 is applied (prevention of electrostatic discharge damage), and in order to prevent the occurrence of noise as a result of the decorative member 10 functioning as an antenna in reaction to electromagnetic waves from the inside of the device to which the decorative member 10 is applied (prevention of induced electromotive force). Therefore, if the thickness of the metal vapor-deposited film 13 is within the above range, electrostatic discharge damage and induced electromotive force in the device to which the decorative member 10 is applied can be prevented. On the other hand, there is a risk that the appearance (mat feeling) of the decorative member 10 may be impaired if the thickness of the metal vapor-deposited film 13 is less than 100 nm. Moreover, when the thickness of the metal vapor-deposited film 13 exceeds 300 nm, prevention of electrostatic discharge damage and induced electromotive force in the device to which the decorative member 10 is applied may become inadequate.

The light scattering transparent film 14 is constituted from a transparent resin in which two or more types of fillers having a light transmissive property and a light scattering property have been dispersed. The transparent resin is not particularly limited, and for example includes an acrylic resin, a urethane resin, an epoxy resin, a vinyl resin, and the like. In greater detail, the light scattering transparent film 14 is a transparent film that is formed by curing the coating material applied to the first surface 13a of the metal vapor-deposited film 13, the coating material containing the resin including fillers. It is preferable to use an acrylic resin for the light scattering transparent membrane 14 since it has excellent adhesion, water resistance, and durability.
As an acrylic resin coating material, specifically an ultraviolet curable coating material: VT9269U (trade name, made by Fujikura Kasei Co.) and the like is used.
VT9269U includes xylene 20 to 30% by mass, and methyl isobutyl ketone ether 20 to 30% by mass.

A dilution agent may be contained in the coating material containing the resin.
For the dilution agent, a slow-drying dilution agent and the like is used, and specifically VM5584 CN-AD (trade name, made by Fujikura Kasei Co.) and the like is used.

Two or more types of fillers having light transmissive properties and light scattering properties are dispersed in the light scattering transparent film, and the two or more types of fillers having light transmissive properties and light scattering properties are preferably a mixture of two or more types among scaly talc, fibrous silica, spherical zeolite, mica, and fibrous aluminosilicate, and more preferably a mixture of at least one type of filler selected from scaly talc, spherical zeolite and mica, and at least one type of filler selected from fibrous silica and fibrous aluminosilicate.

When the light scattering transparent film 14 contains only one type of these fillers, the filler particles have a uniform shape and a uniform refractive index. For this reason, when shining light on a light scattering transparent film that only contains one type of filler, since the light refracted by the filler heads in a certain direction, the reflected light is hardly scattered. In addition, in the case of one type of filler, the filler is not dispersed throughout the light scattering transparent film 14 due to the ease of a filler to aggregate. Accordingly, in the case of using one of these fillers by itself, the desired mat feeling (high-class look) may not be obtained in the light scattering transparent film 14 due to polarization.

Therefore, by using two or more types of different fillers in combination, fillers with different shapes and refractive indices are mixed and come to have an anisotropic shape without being oriented in the same direction. For that reason, light incident on the upper surface of the light scattering transparent film is refracted through the fillers within the light scattering transparent film and reflected by the metal vapor-deposited film while being scattered about in all directions. That reflected light is refracted by the fillers in the light scattering transparent film, scattered in all directions, and again emitted to the outside from the light scattering transparent film. Further, by using two or more types of different fillers in combination, aggregation of the same filler particles can be decreased and the fillers come to be distributed throughout the light scattering transparent film 14. Thus, in the light scattering transparent film 14, the desired mat feeling (high-class look) is obtained by using the above-mentioned two or more types of fillers in combination.

Note that the reason that the two or more types of fillers having light transmissive properties and light scattering properties are preferably a mixture of two or more types among scaly talc, fibrous silica, spherical zeolite, mica, and fibrous aluminosilicate is that these fillers have superior light transmissive properties and light scattering properties.
Further, since scaly talc, spherical zeolite, and mica are scaly or spherical, while fibrous silica and fibrous aluminosilicate are fibrous, the shapes and refractive indices of these greatly differ. Accordingly, mixing of these fillers whose shapes and refractive indices greatly differ leads to an anisotropic shape in which they are less oriented in the same direction compared to the case of mixing fillers with similar shapes and refractive indices, and they are more likely to be dispersed since aggregation of fillers with the same shape can be reduced. Therefore, it is more preferable that the two or more types of fillers having light transmissive properties and light scattering properties be a mixture that consists of at least mixing together at least one type of filler selected from scaly talc, spherical zeolite and mica, and at least one type of filler selected from fibrous silica and fibrous aluminosilicate, in order to highly scatter light in all directions and to obtain a more stable mat feeling (high-class look).

Here, the mat feeling (high-class look) shall be described.
In the present invention, the value is used as an index, the value being obtained by converting relative-specular glossiness at a 60-degree angle measured in accordance with JIS Z8741 into gloss units.
Specifically, the value is obtained by measuring, with a glossmeter, light (reflected light) that has been incident on the decorative member 10 from the outer surface 10a of the decorative member 10 (the first surface 14a of the light scattering transparent film 14) and then reflected by the fillers present in the light scattering transparent film 14.

The average secondary particle diameter of the fillers is preferably 0.1 nm or more and 300 nm or less, and more preferably 0.1 nm or more and 20 nm or less.
When the average secondary particle diameter of the fillers is less than 0.1 nm, there is the risk of the reflected light in the fillers being hard to scatter. On the other hand, when the average secondary particle diameter of the fillers exceeds 300 nm, in the light scattering transparent film 14, the fillers are hindered from sufficiently dispersing, and so the intended mat feeling (high-class look) may be difficult to obtain.

The thickness of the light scattering transparent film 14 is preferably 3 µm or more and 15 µm or less, and more preferably 3 µm or more and 13 µm or less.
The light scattering transparent film 14 is provided in order to protect the metal vapor-deposited film 13 and to impart a mat feeling (high-class look) to the decorative member 10. That is to say, the mat feeling is produced in the decorative member 10 because light that has entered from the first surface 14a of the light scattering transparent film 14 (the outer surface 10a of the decorative member 10) is scattered in the light scattering transparent film 14 due the presence of the fillers contained in the light scattering transparent film 14. If the thickness of the light scattering transparent film 14 is within the aforementioned range, the gloss unit that expresses the relative-specular glossiness of the decorative member 10 is within the predetermined range, and so the desired mat feeling (high-class look) is imparted to the decorative member 10.
On the other hand, when the light scattering transparent film 14 is less than 3 µm where the amount of fillers contained in the light scattering transparent film 14 becomes less, the gloss unit that expresses the relative-specular glossiness of the decorative member 10 may become too great. Moreover, when the thickness of the light scattering transparent film 14 exceeds 15 µm where the amount of fillers contained in the light scattering transparent film 14 becomes greater, the gloss unit that expresses the relative-specular glossiness of the decorative member 10 may be insufficient.

The dispersion amount of the fillers in the light scattering transparent film 14 is 0.2% or more and 4.0% or less, and preferably 0.2% or more and 2.0% or less, and more preferably 0.5% or more and 1.0% or less, in mass ratio.
If the dispersion amount of the fillers in the light scattering transparent film 14 is 0.2% or more and 4.0% or less, since the fillers are dispersed substantially uniformly through the light scattering transparent film 14, the gloss unit that expresses the relative-specular glossiness of the decorative member 10 is within the predetermined range, and the desired mat feeling (high-class look) is imparted to the decorative member 10.
On the other hand, if the dispersion amount of the fillers in the light scattering transparent film 14 is less than 0.2% in mass ratio where the amount of the fillers contained in the light scattering transparent film 14 becomes less, the glass unit that expresses the relative-specular glossiness of the decorative member 10 may become too great. Moreover, if the dispersion amount of the fillers in the light scattering transparent film 14 exceeds 4.0% in mass ratio where the amount of fillers contained in the light scattering transparent film 14 becomes greater, the fillers overlap more. As a result, the light that is scattered by the fillers is hindered from being emitted to outside of the light scattering transparent film 14, and the gloss unit that expresses the relative-specular glossiness of the decorative member 10 may be insufficient.
In addition, if the dispersion amount of the fillers in the light scattering transparent film 14 exceeds 2.0% in mass ratio where the amount of filler with low perspiration resistance becomes greater, and so the perspiration resistance of the entire light scattering transparent film 14 decreases. Therefore, the dispersion amount of the fillers in the light scattering transparent film 14 is preferably 2.0% or less.
Further, the reason that the dispersion amount of the fillers in the light scattering transparent film 14 is preferably 0.5% or more and 1.0% or less is that a stable mat feeling (high-class look) and an excellent perspiration resistance are imparted.

Here, perspiration resistance shall be described.
In the present invention, the difference in 60-degree relative-specular glossiness, converted to gloss units, between the portion where the human perspiration has been dropped and the portion where it has not been dropped is used as an index of perspiration resistance for the decorative member 10. The decorative member 10 is obtained by leaving the decorative member 10 in an environment with a temperature of 65°C and humidity of 95% RH for 48 hours after dropping a few drops of artificial perspiration (L-histidine hydrochloride monohydrate, sodium chloride) on the outer surface 10a of the decorative member 10.

It is preferable that the total light transmittance of the light scattering transparent film 14 be 80.0 to 95.0%.
If the total light transmittance of the light scattering transparent film 14 is within the aforementioned range, light that enters from the first surface 14a of the light scattering transparent film 14 is refracted by the fillers in the light scattering transparent film 14, reflected by the metal vapor-deposited film 13, and further, the reflected light is scattered by the fillers in the light scattering transparent film 14, and the desired mat feeling (high-class feel) is imparted to the decorative member 10 in which that scattered light is again emitted to the outside from the light scattering transparent film 14. Moreover, when the total light transmittance of the light scattering transparent film 14 is less than 80.0% where the light that enters from the first surface 14a of the light scattering transparent film 14 is attenuated within the light scattering transparent film 14, and the reflected light that is reflected by the first surface 13a of the metal vapor-deposited film 13 is attenuated within the light scattering transparent film 14, the gloss unit that expresses the relative-specular glossiness of the decorative member 10 may be insufficient. On the other hand, when the total light transmittance of the light scattering transparent film 14 exceeds 95.0%, the reflected light that is reflected by the first surface 13a of the metal vapor-deposited film 13 and the scattered light that consists of that reflected light being scattered by the filters in the light scattering transparent film 14 become too strong, and so the gloss unit that expresses the relative-specular glossiness of the decorative member 10 may become too large.

The principle of light scattering by fillers with a light transmissive property and a light scattering property in the light scattering transparent film 14 shall be described with reference to FIG. 2.
When light 31 that is incident from the first surface 14a of the light scattering transparent film 14 (incident light) is refracted by the fillers 21 in the light scattering transparent film 14 and is emitted from the fillers 21, it refracts at the surface boundary of the fillers 21 and the transparent resin 22 that constitutes the light scattering transparent film 14. The refracted light 32 that is emitted to the metal vapor-deposited film 13 side from the fillers 21 is reflected by the first surface 13a of the metal vapor-deposited film 13, and the reflected light 33 is refracted again by the fillers 21 and further refracted at the boundary of the fillers 21 and the transparent resin 22 when emitted from the fillers 21. Therefore, the refracted light 34 that is emitted from the fillers 21 to the light scattering transparent film 14 side is emitted from the first surface 14a of the light scattering transparent film 14 in a different direction from the incidence direction of the incident light 31. Thus, since the incidence direction of the incident light 31 and the emission direction of the refracted light 34 differ due to the fillers 21 and the metal vapor-deposited film 13 within the light scattering transparent film 14, light is scattered about in the light scattering transparent film 14. As a result, glare due to reflection of light in the metal vapor-deposited film 13 is suppressed, and a mat feeling is obtained.

In the decorative member 10 having such configuration, the 60-degrees relative-specular glossiness that is measured at the light scattering transparent film 14 side is, in terms of gloss units, preferably 40 or more and 400 or less, and more preferably 50 or more and 150 or less.
If the 60-degree relative-specular glossiness converted into the gloss units is 40 or more and 400 or less, a high-class look resulting from the mat feeling that was not obtained in a conventional configuration is obtained in the decorative member 10. Moreover, when the 60-degree relative-specular glossiness at the light scattering transparent film 14 side of the decorative member 10 is, in terms of gloss units, less than 40 where the gloss becomes too weak, the desired mat feeling (high-class look) may not be obtained. On the other hand, when the 60-degree relative-specular glossiness at the light scattering transparent film 14 side of the decorative member 10, in terms of gloss units, exceeds 400 where the gloss becomes too strong, there is a risk that the desired mat feeling (high-class look) may not be obtained.
The reason that the 60-degree relative-specular glossiness converted to gloss units is more preferably 50 or more and 150 or less is that a stable mat feeling (high-class look) is obtained.

The decorative member 10 is provided with the base material 11, and the undercoat film 12, the metal vapor-deposited film 13 and the light scattering transparent film 14 that are provided on the first surface 11a of the base material 11 **in that** order. Since two or more types of fillers having light transmissive properties and light scattering properties are dispersed within the light scattering transparent film 14, that is, since fillers with different shapes and refractive indices are mixed in the light scattering transparent film 14, these fillers are randomly oriented without facing in a uniform direction. For that reason, light that has entered from the upper surface of the light scattering transparent film 14 is refracted by the fillers in the light scattering transparent film 14, and is scattered in all directions. The scattered light is reflected by the metal vapor-deposited film 13, and that reflected light is scattered in all directions by the fillers in the light scattering transparent film 14, and again emitted to the outside from the light scattering transparent film 14. In addition, since two or more types of fillers are mixed, aggregation of the same filler particles decreases, and the fillers are dispersed throughout the light scattering transparent film 14. Further, since the dispersion amount of the fillers in the light scattering transparent film 14 is 0.2% to 4.0% by mass ratio, the fillers are substantially uniformly dispersed throughout the light scattering transparent film 14. Therefore, the light is scattered uniformly, and the desired uniform mat feeling (high-class look) is obtained even when viewed from any direction. Accordingly, the decorative member 10 with a beautiful appearance having a metallic tone with a good texture, providing a high-class look with a delustered state and appropriate mat feeling is obtained, and not merely a glittering luster such as a metallic luster.

Note that the present embodiment illustrated the decorative member 10 that is provided with the undercoat film 12, the metal vapor-deposited film 13, and the light scattering transparent film 14 that are provided **in that** order on the first surface 11a of the base material 11, but the decorative member of the present invention is not limited thereto. In the decorative member of the present invention, the aforementioned effect is exhibited even if the metal vapor-deposited film 13 is directly provided on the base material with the undercoat film 12 being omitted.

### [Manufacturing Method of Decorative Member]

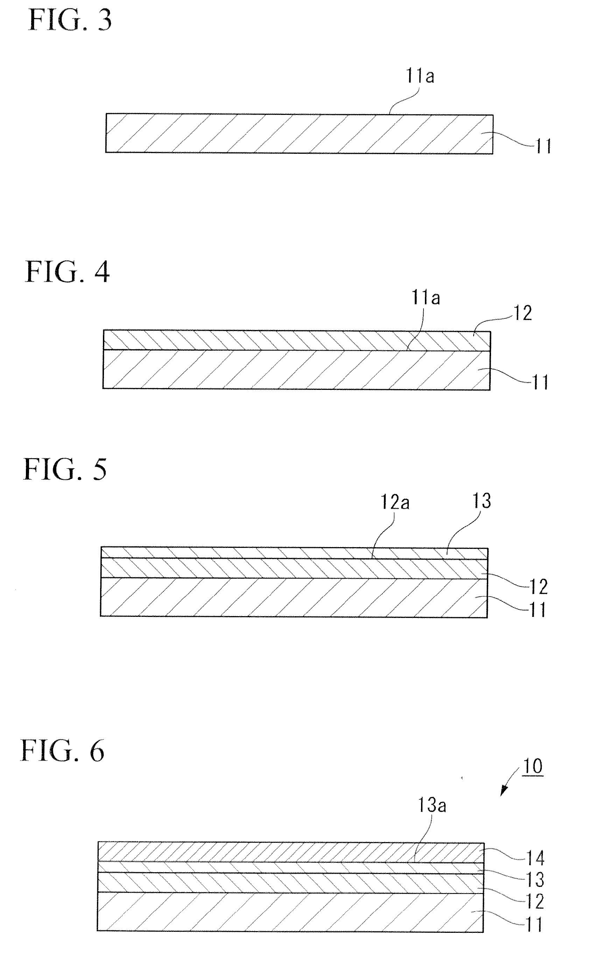

With reference to FIGS. 3 to 6, the manufacturing method of the decorative member according to the first embodiment of the present invention shall be described.
First, as shown in FIG. 3, the base material 11 that is formed in a predetermined shape is prepared by extrusion molding or injection molding.

Subsequently, as shown in FIG. 4, a coating material that includes a resin such as an acrylic resin, a urethane resin, an epoxy resin, or a vinyl resin is applied to the first surface 11a of the base material 11 by a robotic spray method or a spindle spray method, and the coating material is cured to form the undercoat film 12.
For example, in the case of using an ultraviolet curable coating material as the acrylic resin coating material, in order to cure the ultraviolet curable coating material, after performing preliminary drying of the base material 11 that is coated with the acrylic resin coating material at a temperature of 40°C for two minutes, the ultraviolet curable coating material is irradiated with ultraviolet light. The peak intensity of the ultraviolet light that are irradiated on the ultraviolet curable coating material is, for example, 105.0 m W/cm², and the integrated quantity of light of the ultraviolet light is, for example, 1239.0 mJ/cm².
In the case of using a thermosetting coating material as the urethane resin coating material, in order to cure the thermosetting coating material, the base material 11 which is coated with the urethane resin coating material is dried for 90 minutes at a temperature of 80°C.

Subsequently, as shown in FIG. 5, the metal vapor-deposited film 13 that is constituted from one type selected from the group of base metals, such as tin (Sn), aluminum (Al), and indium (In), and its oxide is formed by a vapor deposition method on the first surface 12a on the undercoat film 12.
Although a vacuum deposition method that utilizes a resistance wire heating system, a sputtering method or the like is used as the vapor deposition method, the vacuum deposition method that utilizes a resistance wire heating system is preferable in consideration of its operability and the controllability of the thickness of the metal vapor-deposited film 13.

Subsequently, as shown in FIG. 6, a coating material that includes a resin such as an acrylic resin, a urethane resin, an epoxy resin, or a vinyl resin is applied to the first surface 13a of the metal vapor-deposited film 13 by the robotic spray method or the spindle method, the coating material is cured to form the light scattering transparent film 14, and the decorative member 10 is obtained.
For example, in the case of using the ultraviolet curable acrylic resin coating material, in order to cure the ultraviolet curable acrylic resin coating material, after performing preliminary drying of the plastic base material 11 that is coated with the acrylic resin coating material at a temperature of 60°C for three minutes, the acrylic resin coating material is irradiated with ultraviolet light. The peak intensity of the ultraviolet light that are irradiated on the acrylic resin coating material is, for example, 105.0 mW/cm², and the integrated quantity of light of the ultraviolet light is, for example, 1239.0 mJ/cm².

Hereinbelow, the present invention shall be described more specifically with examples and comparative examples, but the present invention is not to be considered as limited to the following examples.

### [example 1]

An ultraviolet curable coating material: VB3025U (trade name, made by Fujikura Kasei Co.) that includes AD2986D (trade name, made by Fujikura Kasei Co.) as an additive was applied to the first surface of a base material that consists of ABS resin that was formed in predetermined shape by injection molding with a surface texturing process performed on the surface. After performing preliminary drying of the base material coated with the ultraviolet curable coating material at a temperature of 40°C for two minutes, the ultraviolet curable coating material was irradiated with ultraviolet light, and the ultraviolet curable coating material was cured to form an undercoat with a thickness of 10 µm. The peak intensity of the ultraviolet light that were irradiated on the ultraviolet curable coating material was 105.0 mW/cm², and the integrated quantity of light of the ultraviolet light was 1239.0 mJ/cm².
Next, a metal vapor-deposited film that consists of tin with a thickness of 200 nm was formed by a vacuum deposition method utilizing a resistance wire heating system on the surface of the undercoat film being opposite to the surface that is in contact with the base material.
Next, on the surface of the metal vapor-deposited film being opposite to the surface that is in contact with the undercoat film, the ultraviolet curable coating material VT9269U (trade name, made by Fujikura Kasei Co.) that includes the dilution agent VM5584 CN-AD (trade name, made by Fujikura Kasei Co.) in addition to including a mixture of scaly talc with an average secondary particle diameter of 10 nm and fibrous silica with an average secondary particle diameter of 0.5 nm as fillers was applied by a robotic spray method. After performing preliminary drying of the base material coated with the ultraviolet curable coating material at a temperature of 60°C for three minutes, the ultraviolet curable coating material was irradiated with ultraviolet light. By curing the ultraviolet curable coating material, a light scattering transparent film with a thickness of 10 µm was formed, and the sample of Example 1 was manufactured. The peak intensity of the ultraviolet light that were irradiated on the ultraviolet curable coating material was 105.0 mW/cm², and the integrated quantity of light of the ultraviolet light was 1239.0 mJ/cm².
The dispersion amount of the fillers in the light scattering transparent film was 0.2% in mass ratio.

### [Example 2]

Using a mixture of scaly talc with an average secondary particle diameter of 10 nm and fibrous silica with an average secondary particle diameter of 0.5 nm as fillers, a sample of Example 2 was manufactured in the same manner as Example 1, with the exception that the dispersion amount of the fillers in the light scattering transparent film was 0.5% in mass ratio.

### [Example 3]

Using a mixture of scaly talc with an average secondary particle diameter of 10 nm and fibrous silica with an average secondary particle diameter of 0.5 nm as fillers, a sample of Example 3 was manufactured in the same manner as Example 1, with the exception that the dispersion amount of the fillers in the light scattering transparent film was 0.75% in mass ratio.

### [Example 4]

Using a mixture of scaly talc with an average secondary particle diameter of 10 nm and fibrous silica with an average secondary particle diameter of 0.5 nm as fillers, a sample of Example 4 was manufactured in the same manner as Example 1, with the exception that the dispersion amount of the fillers in the light scattering transparent film was 1.0% in mass ratio.

### [Example 5]

Using a mixture of scaly talc with an average secondary particle diameter of 10 nm and fibrous silica with an average secondary particle diameter of 0.5 nm as fillers, a sample of Example 5 was manufactured in the same manner as Example 1, with the exception that the dispersion amount of the fillers in the light scattering transparent film was 1.5% in mass ratio.

### [Example 6]

Using a mixture of scaly talc with an average secondary particle diameter of 10 nm and fibrous silica with an average secondary particle diameter of 0.5 nm as fillers, a sample of Example 6 was manufactured in the same manner as Example 1, with the exception that the dispersion amount of the fillers in the light scattering transparent film was 2.0% in mass ratio.

### [Example 7]

Using a mixture of scaly talc with an average secondary particle diameter of 10 nm and fibrous silica with an average secondary particle diameter of 0.5 nm as fillers, a sample of Example 7 was manufactured in the same manner as Example 1, with the exception that the dispersion amount of the fillers in the light scattering transparent film was 2.5% in mass ratio.

### [Example 8]

Using a mixture of scaly talc with an average secondary particle diameter of 10 nm and fibrous silica with an average secondary particle diameter of 0.5 nm as fillers, a sample of Example 8 was manufactured in the same manner as Example 1, with the exception that the dispersion amount of the fillers in the light scattering transparent film was 3.0% in mass ratio.

### [Example 9]

Using a mixture of scaly talc with an average secondary particle diameter of 10 nm and fibrous silica with an average secondary particle diameter of 0.5 nm as fillers, a sample of Example 9 was manufactured in the same manner as Example 1, with the exception that the dispersion amount of the fillers in the light scattering transparent film was 4.0% in mass ratio.

### [Comparative Example 1]

Using a mixture of scaly talc with an average secondary particle diameter of 10 nm and fibrous silica with an average secondary particle diameter of 0.5 nm as fillers, a sample of Comparative Example 1 was manufactured in the same manner as Example 1, with the exception that the dispersion amount of the fillers in the light scattering transparent film was 0.1% in mass ratio.

### [Comparative Example 2]

Using a mixture of scaly talc with an average secondary particle diameter of 10 nm and fibrous silica with an average secondary particle diameter of 0.5 nm as fillers, a sample of Comparative Example 2 was manufactured in the same manner as Examples 1, with the exception that the dispersion amount of the fillers in the light scattering transparent film was 4.2% in mass ratio.

### [Comparative Example 3]

Using only scaly talc with an average secondary particle diameter of 10 nm as a filler, a sample of Comparative Example 3 was manufactured in the same manner as Example 1, with the exception that the dispersion amount of the filler in the light scattering transparent film was 0.75% in mass ratio.

### [Comparative Example 4]

Using only fibrous silica with an average secondary particle diameter of 0.5 nm as the filler, a sample of Comparative Example 4 was manufactured in the same manner as Example 1, with the exception that the dispersion amount of the filler in the light scattering transparent film was 0.75% in mass ratio.

### [Comparative Example 5]

Using only spherical zeolite with an average secondary particle diameter of 10 nm as the filler, a sample of Comparative Example 5 was manufactured in the same manner as Example 1, with the exception that the dispersion amount of the filler in the light scattering transparent film was 0.75% in mass ratio.

### [Example 10]

Using a mixture of spherical zeolite with an average secondary particle diameter of 10 nm and fibrous aluminosilicate with an average secondary particle diameter of 0.5 nm as the fillers, a sample of Comparative Example 10 was manufactured in the same manner as Example 1, with the exception that the dispersion amount of the fillers in the light scattering transparent film was 0.75% in mass ratio.

### [Example 11]

Using a mixture of mica with an average secondary particle diameter of 10 nm and fibrous silica with an average secondary particle diameter of 0.5 nm as the fillers, a sample of Example 11 was manufactured in the same manner as Example 1, with the exception that the dispersion amount of the fillers in the light scattering transparent film was 0.75% in mass ratio.

### [Example 12]

Using scaly talc with an average secondary particle diameter of 10 nm and fibrous silica with an average secondary particle diameter of 0.5 nm as fillers, a sample of Example 12 was manufactured in the same manner as Example 1, with the exception that the dispersion amount of the fillers in the light scattering transparent film was 0.75% in mass ratio and the thickness of the light scattering transparent film was 1 µm.

### [Example 13]

Using a mixture of scaly talc with an average secondary particle diameter of 10 nm and fibrous silica with an average secondary particle diameter of 0.5 nm as fillers, a sample of Example 13 was manufactured in the same manner as Example 1, with the exception that the dispersion amount of the fillers in the light scattering transparent film was 0.75% in mass ratio and the thickness of the light scattering transparent was film 3 µm.

### [Example 14]

Using a mixture of scaly talc with an average secondary particle diameter of 10 nm and fibrous silica with an average secondary particle diameter of 0.5 nm as fillers, a sample of Example 14 was manufactured in the same manner as Examples 1, with the exception that the dispersion amount of the fillers in the light scattering transparent film was 0.75% in mass ratio and the thickness of the light scattering transparent film was 5 µm.

### [Example 15]

Using a mixture of scaly talc with an average secondary particle diameter of 10 nm and fibrous silica with an average secondary particle diameter of 0.5 nm as fillers, a sample of Example 15 was manufactured in the same manner as Example 1, with the exception that the dispersion amount of the fillers in the light scattering transparent film was 0.75% in mass ratio and the thickness of the light scattering transparent film was 15 µm.

### [Example 16]

Using a mixture of scaly talc with an average secondary particle diameter of 10 nm and fibrous silica with an average secondary particle diameter of 0.5 nm as fillers, a sample of Example 16 was manufactured in the same manner as Example 1, with the exception that the dispersion amount of the fillers in the light scattering transparent film was 0.75% in mass ratio and the thickness of the light scattering transparent film was 18 µm.

### [Evaluation of the Samples]

The mat feeling and perspiration resistance of samples of the Examples 1 to 16 and Comparative Examples 1 to 5 were evaluated.
The evaluation method is as given below.

### <1> Mat feeling (Gloss unit)

With respect to the samples of Example 1 and Comparative Examples 1 and 2, the relative-specular glossiness (gloss unit) of each sample was obtained by measuring, with a glossmeter, light (reflected light) that had been incident on each sample from its light scattering transparent film or the top coat film side at an incident angle of 60 degrees and then reflected by the sample.
Here, when the gloss unit was 40 or more and 400 or less, the mat feeling was evaluated as "good", when the gloss unit was 50 or more and 150 or less, the mat feeling was evaluated to as "excellent", and when the gloss unit was less than 40 or exceeded 400, the mat feeling was evaluated to as "bad".
Note that when setting the aforementioned numerical value ranges, a questionnaire survey was conducted about the relation between gloss units and the presence of a high-class look as a visual-sense test. Specifically, 100 people were asked about the presence of a high-class look at every 10 gloss units. As a result, the ratio of people who replied that there is a high-class look at gloss units of 40 to 50 and 150 to 400 was 80 to 95%, with the ratio being 95% or higher for gloss units of 50 to 150, and 50% or less for gloss units less than 40 and exceeding 400.
The evaluation results for the samples of Examples 1 to 16 and Comparative Examples 1 to 5 are given in Tables 1 to 3.

### <2> Perspiration Resistance

With regard to the samples of Examples 1 to 16 and Comparative Examples 1 to 5, after dropping several drops of artificial perspiration (having L-histidine hydrochloride monohydrate and sodium chloride as essential components) on the outer surface 10a of the decorative member 10 serving as the sample, the decorative member 10 was left in an environment with a temperature of 65°C and humidity of 95% RH for 48 hours. Light (reflected light) was measured with a glossmeter, the light having been incident at an incident angle of 60 degrees from the top coat film side on each of the portion where several drops of the artificial perspiration were dropped and the portion where it was not dripped, and then. The difference in gloss units obtained from the measurement was calculated, and in the case of the difference being less than 5, the perspiration resistance was evaluated as "Excellent", if the difference was 5 or more and less than 10, the perspiration resistance was evaluated as "Good", and if the difference was 10 or more, the perspiration resistance was evaluated as "Bad".
The results are given in Tables 1 to 3.

**[Table 1]**

| | Filler Dispersion Amount (mass %) | Filler A | | | Filler B | Thickness of Light Scattering Transparent Film (µm) | Mat feeling (Gloss Unit) | Perspiration Resistance |
|---|---|---|---|---|---|---|---|---|
| | | Type | Avg. Secondary Particle Diameter | Type | Avg. Secondary Particle Diameter (nm) | | | |
| Example 1 | 0.2 | Scaly talc | 10 | Fibrous silica | 0.5 | 10 | Good | Excellent |
| Example 2 | 0.5 | Scaly talc | 10 | Fibrous silica | 0.5 | 10 | Excellent | Excellent |
| Examples 3 | 0.75 | Scaly talc | 10 | Fibrous silica | 0.5 | 10 | Excellent | Excellent |
| Examples 4 | 1.0 | Scaly talc | 10 | Fibrous silica | 0.5 | 10 | Excellent | Excellent |
| Example 5 | 1.5 | Scaly talc | 10 | Fibrous silica | 0.5 | 10 | Good | Excellent |
| Example 6 | 2.0 | Scaly talc | 10 | Fibrous silica | 0.5 | 10 | Good | Excellent |
| Example 7 | 2.5 | Scaly talc | 10 | Fibrous silica | 0.5 | 10 | Good | Good |
| Example 8 | 3.0 | Scaly talc | 10 | Fibrous silica | 0.5 | 10 | Good | Good |
| Examples 9 | 4.0 | Scaly talc | 10 | Fibrous silica | 0.5 | 10 | Good | Good |

**[Table 2]**

| | Filler Dispersion Amount (mass %) | Filler A | | Filler B | | Thickness of Light Scattering Transparent Film (µm) | Mat feeling (Gloss Unit) | Perspiration Resistance |
|---|---|---|---|---|---|---|---|---|
| | | Type | Avg. Secondary Particle Diameter (nm) | Type | Avg. Secondary Particle Diameter (nm) | | | |
| Comparative Example 1 | 0.1 | Scaly talc | 10 | Fibrous silica | 0.5 | 10 | Bad | Excellent |
| Comparative Example 2 | 4.2 | Scaly talc | 10 | Fibrous silica | 0.5 | 10 | Bad | Bad |
| Comparative Example 3 | 0.75 | Scaly talc | 10 | - | - | 10 | Bad | Excellent |
| Comparative Example 4 | 0.75 | Fibrous silica | 0.5 | - | - | 10 | Bad | Excellent |
| Comparative Example 5 | 0.75 | Spherical zeolite | 10 | - | - | 10 | Bad | Excellent |

**[Table 3]**

| | Filler Dispersion Amount (mass%) | Filler A | | Filler B | | Thickness of Light Scattering Transparent Film (µm) | Mat feeling (Gloss Unit) | Perspiration Resistance |
|---|---|---|---|---|---|---|---|---|
| | | Type | Avg. Secondary Particle Diameter (nm) | Type | Avg. Secondary Particle Diameter (nm) | | | |
| Example 10 | 0.75 | Spherical zeolite | 10 | Fibrous aluminosilicate | 0.5 | 10 | Excellent | Excellent |
| Example 11 | 0.75 | Mica | 10 | Fibrous silica | 0.5 | 10 | Excellent | Excellent |
| Examples 12 | 0.75 | Scaly talc | 10 | Fibrous silica | 0.5 | 1 | Good | Good |
| Example 13 | 0.75 | Scaly talc | 10 | Fibrous silica | 0.5 | 3 | Excellent | Excellent |
| Example 14 | 0.75 | Scaly talc | 10 | Fibrous silica | 0.5 | 5 | Excellent | Excellent |
| Example 15 | 0.75 | Scaly talc | 10 | Fibrous silica | 0.5 | 15 | Excellent | Excellent |
| Example 16 | 0.75 | Scaly talc | 10 | Fibrous silica | 0.5 | 18 | Good | Excellent |

From the results as shown in Table 1 and Table 2, it is confirmed that the samples of Examples 1 to 16 have excellent mat feeling and perspiration resistance.
In addition, provided the dispersion amount of the fillers is 0.5 mass% or more and 1.0 mass% or less, and the thickness of the light scattering transparent layer is 10 µm, it is confirmed that the mat feeling and perspiration resistance are extremely excellent for whichever fillers are used in the Examples 1 to 16.
Moreover, from the result of Table 2, it is found that the samples of Comparative Example 1 and Comparative Examples 3 to 5 have excellent perspiration resistance, but inferior mat feeling.
Further, it is found that the sample of Comparative Example 2 have inferior mat feeling and perspiration resistance.

### (2) Second Embodiment "Decorative Member"

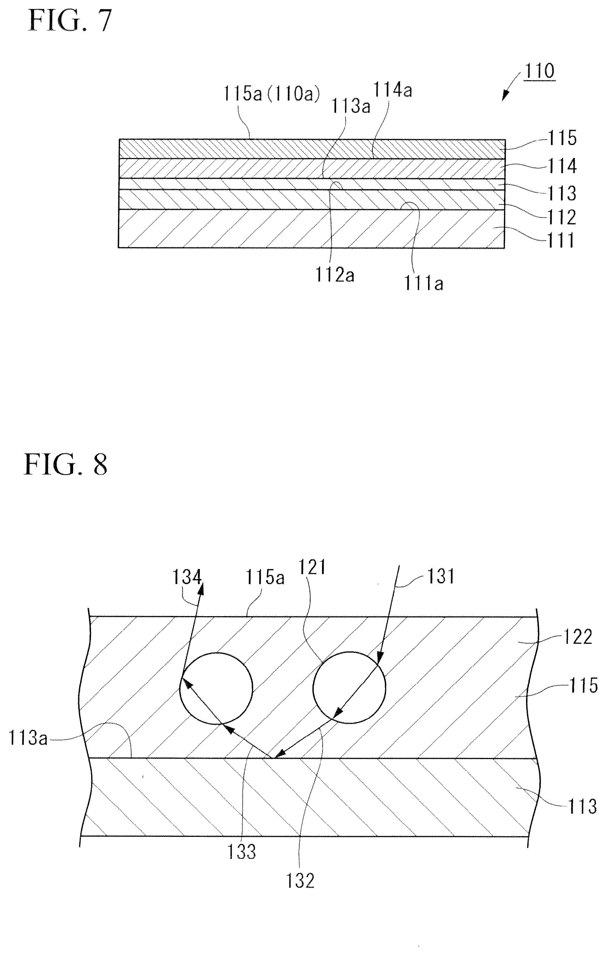

FIG. 7 is a schematic cross-sectional view that shows the decorative member according to the second embodiment of the present invention.
The decorative member 110 of the present embodiment is provided with a base material 111, and an undercoat film 112, a metal vapor-deposited film 113, a transparent film 114, and a light scattering transparent film 115 that are provided in this order on a first surface 111a of the base material 111.
The decorative member 110 is used as a member that constitutes a portion or the entirety of the main body of a digital consumer product such as a digital still camera and a digital video camera, and the light scattering transparent film 115 is arranged at the outermost surface.

That is to say, the metal vapor-deposited film 113 is provided on the surface (hereinbelow referred to as the "first surface") 112a of the undercoat film 112 being opposite to the surface that is in contact with the base material 111.
Moreover, the transparent film 114 is provided on the surface (hereinbelow referred to as the "first surface") 113a of the metal vapor-deposited film 113 being opposite to the surface that is in contact with the undercoat film 112.
Further, the light scattering transparent film 115 is provided on the surface (hereinbelow referred to as the "first surface") 114a of the transparent film 114 being opposite to the surface that is in contact with the metal vapor-deposited film 113.

The base material 111 is not particularly limited, and examples include a plastic molding article in which a resin such as polyethylene (PE), polyethylene terephthalate (PET), polyvinyl chloride (PVC), polyvinylidene chloride (PVDC), polylactic acid (PLA), polypropylene (PP), polyamide (PA), polycarbonate (PC), polytetrafluoroethylene (PTFE), polyurethane (PU), polystyrene (PS), polyacetal (POM), acrylonitrile butadiene styrene copolymer (ABS resin), or acrylate resin (PMMA) is formed in an arbitrary shape by a molding method including extrusion molding or injection molding method, and a metal molding article in which a metal such as aluminum or stainless steel is formed in an arbitrary shape by an arbitrary molding method. For the base material 111, it is preferable to use a plastic molding article due to its excellent strength and workability and low cost.
As the plastic molding article, one with a smooth surface or one in which a texturing process has been performed on the surface is used.

In surface texturing in a plastic molded article, various kinds of patterns that are formed in the inner surface of a metal mold (the surface that makes contact with resin) used when extrusion molding or injection molding the above kinds of resin are transferred to the surface of the plastic molded article.
A pattern that it is formed on the surface of a plastic molded article by surface texturing includes a leather pattern, a wood grain pattern, a rock pattern, a grain pattern, a satin pattern, a geometrical pattern, and the like.

The undercoat film 112 is not particularly limited, and for example includes an acrylic resin, a urethane resin, an epoxy resin, a vinyl resin, and the like. In greater detail, the undercoat film 112 is a resin layer that is formed by hardening a coating material containing the aforementioned resin that is applied to the first surface 111a of the base material 111. It is preferable to use an acrylic resin or a urethane resin for the undercoat film 112 since they have excellent adhesion, water resistance, and durability.
Specifically, an ultraviolet curable coating material: VB3025U (trade name, made by Fujikura Kasei Co.) is used for an acrylic resin coating material, for example.
For a urethane resin coating material, specifically a thermosetting coating material: VB8600L (trade name, made by Fujikura Kasei Co.) is used, for example.
VB3025U includes ethyl acetate 20 to 30% by mass, and propylene glycol monomethyl ether 20 to 30% by mass.
VB8600L includes ethylene glycol monobutyl ether 10 to 20% by mass, and hydrocarbons 10 to 20% by mass.

An additive may be contained in the coating material.
As an additive, a crosslinking accelerator or the like is used and, specifically, AD2986D (trade name, made by Fujikura Kasei Co.) is used, for example.

The thickness of the undercoat film 112 is preferably 5 µm or more and 15 µm or less, and more preferably 8 µm or more and 12 µm or less.
The undercoat film 112 is provided for surface preparation of the first surface 111a of the base material 111 that serves as the foundation of the middle coat layer 114 and the top coat layer 115. That is, in order to level the unevenness resulting from irregularities of the first surface 111a of the base material 111, the undercoat film 112 is provided. Therefore, if the thickness of the undercoat film 112 is within the aforementioned range, even if the first surface 111a of the base material 111 has irregularities, the undercoat film 112 will absorb the irregularities and the first surface 112a of the undercoat film 112 will turn into an even surface. Moreover, if the thickness of the undercoat film 112 is less than 5 µm, the undercoat film 112 may not be able to absorb irregularities in the first surface 111a of the base material 111. On the other hand, even if the thickness of the undercoat film 112 exceeds 15 µm, a greater effect may not be acquired.

The metal vapor-deposited film 113 is formed by a vapor deposition method, and is constituted from: one type selected from the group of base metals, such as tin (Sn), aluminum (Al), and indium (In); and its oxide. In greater detail, the metal vapor-deposited film 113 is a layer that includes: one type selected from the group of base metals, such as high-purity tin (Sn), aluminum (Al), and indium (In), as a main component; and its oxide as an impurity.

The thickness of the metal vapor-deposited film 113, it is preferably 100 nm or more and 300 nm or less, and more preferably 150 nm or more and 250 run or less.
It is preferable that the metal vapor-deposited film 113 be a non-conductive film that is provided in order to prevent electrostatic discharge damage caused by static electricity of the human body affecting circuits in the device to which the decorative member 110 is applied (prevention of electrostatic discharge damage), and in order to prevent the occurrence of noise as a result of the decorative member 110 functioning as an antenna in reaction to electromagnetic waves from the inside of the device to which the decorative member 110 is applied (prevention of induced electromotive force). Therefore, if the thickness of the metal vapor-deposited film 113 is within the above range, electrostatic discharge damage and induced electromotive force in the device to which the decorative member 110 is applied can be prevented.
On the other hand, there is a risk that the appearance (mat feeling) of the decorative member 110 may be impaired if the thickness of the metal vapor-deposited film 113 is less than 100 nm. Moreover, when the thickness of the metal vapor-deposited film 113 exceeds 300 nm, prevention of electrostatic discharge damage and induced electromotive force in the device to which the decorative member 110 is applied may become inadequate.

The transparent film 114 is not particularly limited, and for example includes a vinyl resin, an acrylic resin, a urethane resin, and an epoxy resin. In greater detail, the transparent film 114 is a resin layer that is formed by curing a coating material containing the aforementioned resin that is applied to the first surface 113a of the metal vapor-deposited film 113. It is preferable to use a vinyl resin for the transparent film 114 in order to improve the adhesion with the metal vapor-deposited film 113.
As a vinyl resin coating material, specifically an ultraviolet curable coating material: VM5484U (trade name, made by Fujikura Kasei Co.) and the like is used.
VM5484U includes toluene 20 to 30% by mass, and methyl ethyl ketone 20 to 30% by mass.

A dilution agent or an additive may be contained in the coating material that includes the resin.
For the dilution agent, a slow-drying dilution agent or the like is used, and specifically VM5584 CN-AD (trade name, made by Fujikura Kasei Co.) or the like is used.
As an additive, a metal adhesion imparting agent or the like is used, and specifically AD5315D (trade name, made by Fujikura Kasei Co.) or the like is used.

The thickness of the transparent film 114 is preferably 5 µm or more and 15 µm or less, and more preferably 8 µm or more and 12 µm or less.
The transparent film 114 is provided in order to improve the adhesion of the light scattering transparent film 115 to the metal vapor-deposited film 113, and impart perspiration resistance to the decorative member 110. Accordingly, if the thickness of the transparent film 114 is within the aforementioned range, it is possible to sufficiently secure the adhesiveness of the light scattering transparent film 115 to the metal vapor-deposited film 113, and the decorative member 110 has excellent perspiration resistance. Moreover, if the thickness of the transparent film 114 is less than 5 µm, the adhesion of the light scattering transparent film 115 to the metal vapor-deposited film 113 becomes insufficient, and the perspiration resistance of the decorative member 110 may deteriorate. Meanwhile, if the thickness of the transparent film 114 exceeds 15 µm, a greater effect may not be obtained. Additionally, it is not preferred due to an increase in the overall thickness of the decorative member 110.

Here, perspiration resistance shall be described.
In the present invention, the difference in 60-degree relative-specular glossiness, converted to gloss units, between the portion where the human perspiration has been dropped and the portion where it has not been dropped is used as an index of perspiration resistance for the decorative member 110. The decorative member 110 is obtained by leaving the decorative member 110 in an environment with a temperature of 65°C and humidity of 95% RH for 48 hours after dropping a few drops of artificial perspiration (L-histidine hydrochloride monohydrate, sodium chloride) on the outer surface 110a of the decorative member 10.

The light scattering transparent film 115 is constituted from a transparent resin in which two or more types of fillers having a light transmissive property and a light scattering property have been dispersed. The transparent resin is not particularly limited, and for example includes an acrylic resin, a urethane resin, an epoxy resin, a vinyl resin, and the like. In greater detail, the light scattering transparent film 115 is a transparent film that is formed by curing the coating material, which contains the resin including the fillers, which was applied to the first surface 114a of the transparent film 114. It is preferable to use an acrylic resin for the light scattering transparent film 114 due to its excellent adhesion, waster resistance, and durability.
As an acrylic resin coating material, specifically an ultraviolet curable coating material: VT9269U (trade name, made by Fujikura Kasei Co.) and the like is used.
VT9269U includes xylene 20 to 30% by mass, and methyl isobutyl ketone ether 20 to 30% by mass.

A dilution agent may be contained in the coating material containing the resin.
As the dilution agent, a slow-drying dilution agent and the like is used and, specifically, VM5584 CN-AD (trade name, made by Fujikura Kasei Co.) and the like is used.

Two or more types of fillers having light transmissive properties and light scattering properties are dispersed in the light scattering transparent film 115, and the two or more types of fillers having light transmissive properties and light scattering properties are preferably a mixture of two or more types among scaly talc, fibrous silica, spherical zeolite, mica, and fibrous aluminosilicate, and more preferably a mixture of at least one type of filler selected from scaly talc, spherical zeolite and mica, and at least one type of filler selected from fibrous silica and fibrous aluminosilicate.

When the light scattering transparent film 115 contains only one type of these fillers, the filler particles have a uniform shape and a uniform refractive index. For this reason, when shining light on a light scattering transparent film 115 that only contains one type of filler, since the light refracted by the filler heads in a certain direction, the reflected light is hardly scattered. In addition, in the case of one type of filler, the filler is not dispersed throughout the light scattering transparent film 115 due to the ease of a filler to aggregate. Accordingly, in the case of using one of these fillers by itself, the desired mat feeling (high-class look) may not be obtained in the light scattering transparent film 115 due to polarization.

Therefore, by using two or more types of different fillers in combination, fillers with different shapes and refractive indices are mixed and come to have an anisotropic shape without being oriented in the same direction. For that reason, light that is incident on the upper surface of the light scattering transparent film is refracted through the fillers within the light scattering transparent film and reflected by the metal vapor-deposited film while being scattered about in all directions. That reflected light is scattered in all directions by the fillers in the light scattering transparent film, and again emitted to the outside from the light scattering transparent film. Further, by using two or more types of different fillers in combination, aggregation of the same filler particles can be decreased and the fillers come to be distributed throughout the light scattering transparent film 115. Thus, in the light scattering transparent film 115, the desired uniform mat feeling (high-class look) from any viewpoint is obtained by using the above-mentioned two or more types of fillers in combination.

Note that the reason that the two or more types of fillers having light transmissive properties and light scattering properties are preferably a mixture of two or more types among scaly talc, fibrous silica, spherical zeolite, mica, and fibrous aluminosilicate is that these fillers have superior light transmissive properties and light scattering properties.
Further, since scaly talc, spherical zeolite, and mica are scaly or spherical, while fibrous silica and fibrous aluminosilicate are fibrous, the shapes and refractive indices of these greatly differ. Accordingly, mixing of these fillers whose shapes and refractive indices greatly differ leads to an anisotropic shape in which they are less oriented in the same direction compared to the case of mixing fillers with similar shapes and refractive indices, and they are more likely to be dispersed since aggregation of fillers with the same shape can be reduced. Therefore, it is more preferable that the two or more types of fillers having light transmissive properties and light scattering properties be a mixture that consists of at least mixing together at least one type of filler selected from scaly talc, spherical zeolite and mica, and at least one type of filler selected from fibrous silica and fibrous aluminosilicate, in order to highly scatter light in all directions and to obtain a more stable mat feeling (high-class look).

Here, the mat feeling (high-class look) shall be described.
In the present invention, the value is used as an index, the value being obtained by converting relative-specular glossiness at a 60-degree angle measured in accordance with JIS Z8741 into gloss units.
Specifically, the value is obtained by measuring, with a glossmeter, light (reflected light) that has been incident on the decorative member 110 from the outer surface 110a of the decorative member 110 (the first surface 114a of the light scattering transparent film 114), and then reflected by the fillers present in the light scattering transparent film 114.

The average secondary particle diameter of the fillers is preferably 0.1 nm or more and 300 nm or less, and more preferably 0.1 nm or more and 20 nm or less.
When the average secondary particle diameter of the fillers is less than 0.1 nm, there is the risk of the reflected light in the fillers being hard to scatter. On the other hand, when the average secondary particle diameter of the fillers exceeds 300 nm, in the light scattering transparent film 115, the fillers are hindered from sufficiently dispersing, and so the intended mat feeling (high-class look) may be difficult to obtain.

The thickness of the light scattering transparent film 115 is preferably 3 µm or more and 15 µm or less, and more preferably 3 µm or more and 13 µm or less.
The light scattering transparent film 115 is provided in order to impart a mat feeling (high-class look) to the decorative member 110. That is to say, the mat feeling is produced in the decorative member 110 because light that has entered from the first surface 115a of the light scattering transparent film 115 (the outer surface 110a of the decorative member 110) is scattered in the light scattering transparent film 115 due the presence of the fillers contained in the light scattering transparent film 115. If the thickness of the light scattering transparent film 115 is within the aforementioned range, the gloss unit that expresses the relative-specular glossiness of the decorative member 110 is within the predetermined range, and so the desired mat feeling (high-class look) is imparted to the decorative member 110.
On the other hand, when the light scattering transparent film 115 is less than 3 µm where the amount of fillers contained in the light scattering transparent film 115 becomes less, the gloss unit that expresses the relative-specular glossiness of the decorative member 110 may become too great. Moreover, when the thickness of the light scattering transparent film 115 exceeds 15 µm where the amount of fillers contained in the light scattering transparent film 115 becomes greater, the gloss unit that expresses the relative-specular glossiness of the decorative member 110 may be insufficient.

The dispersion amount of the fillers in the light scattering transparent film 115 is 0.2% or more and 4.0% or less, and preferably 0.2% or more and 2.0% or less, and more preferably 0.5% or more and 1.0% or less, in mass ratio.
If the dispersion amount of the fillers in the light scattering transparent film 115 is 0.2% or more and 4.0% or less, since the fillers are dispersed substantially uniformly through the light scattering transparent film 115, the gloss unit that expresses the relative-specular glossiness of the decorative member 110 is within the predetermined range, and the desired mat feeling (high-class look) is imparted to the decorative member 110. Also, if the dispersion amount of the fillers in the light scattering transparent film 115 is less than 0.2% in mass ratio where the amount of the fillers that are contained in the light scattering transparent film 115 becomes less, the gloss unit that expresses the relative-specular glossiness of the decorative member 110 may become too great. Meanwhile, if the dispersion amount of the fillers in the light scattering transparent film 115 exceeds 4.0% in mass ratio where the amount of fillers contained in the light scattering transparent film 115 becomes greater, the fillers overlap more. As a result, the light that is scattered by the fillers is hindered from being emitted to outside of the light scattering transparent film 115, and the gloss unit that expresses the relative-specular glossiness of the decorative member 110 may be insufficient.
Moreover, if the dispersion amount of the fillers in the light scattering transparent film 115 exceeds 2.0% in mass ratio, the amount of filler with low perspiration resistance increases, and so the perspiration resistance of the entire light scattering transparent film 115 decreases. Therefore, the dispersion amount of the fillers in the light scattering transparent film 115 is preferably 2.0% or less.
Moreover, the reason that the dispersion amount of the fillers in the light scattering transparent film 115 is preferably 0.5% or more or 1.0% or less is that a stable mat feeling (high-class look) and an excellent perspiration resistance are imparted.

Moreover, the total light transmittance of the light scattering transparent film 115 is 80.0 to 95.0%.
If the total light transmittance of the light scattering transparent film 115 is within the aforementioned range, light that enters from the first surface 115a of the light scattering transparent film 115 is refracted by the fillers in the light scattering transparent film 115, reflected by the metal vapor-deposited film 113. Since the reflected light is scattered by the fillers in the light scattering transparent film 115, and that scattered light is emitted again from the light scattering transparent film 115 to the outside, the desired mat feeling (high-class feel) is imparted to the decorative member 110. Moreover, when the total light transmittance of the light scattering transparent film 115 is less than 80.0% where the light that enters from the first surface 115a of the light scattering transparent film 115 is attenuated within the light scattering transparent film 115, and the reflected light that is reflected by the first surface 113a of the metal vapor-deposited film 113 is attenuated within the light scattering transparent film 115, the gloss unit that expresses the relative-specular glossiness of the decorative member 110 may be insufficient. On the other hand, when the total light transmittance of the light scattering transparent film 115 exceeds 95.0%, the reflected light that is reflected by the first surface 113a of the metal vapor-deposited film 113 and the scattered light that consists of that reflected light being scattered by the fillers in the light scattering transparent film 115 become too strong, and so the gloss unit that expresses the relative-specular glossiness of the decorative member 110 may become too large.

The principle of light scattering by fillers with a light transmissive property and a light scattering property in the light scattering transparent film 115 shall be described with reference to FIG. 8. Note that in order to simplify the description here, the transparent film 114 is omitted in FIG. 8.
When light 131 that is incident from the first surface 115a of the light scattering transparent film 115 (incident light) is refracted by the fillers 121 in the light scattering transparent film 115 and is emitted from the fillers 121, it refracts at the surface boundary of the fillers 121 and the transparent resin 122 that constitutes the light scattering transparent film 115. The refracted light 132 that is emitted to the metal vapor-deposited film 113 side from the fillers 121 is reflected by the first surface 113a of the metal vapor-deposited film 113, and the reflected light 133 is refracted again by the fillers 121 and further refracted at the boundary of the fillers 121 and the transparent resin 122 when emitted from the fillers 121. Therefore, the refracted light 134 that is emitted from the fillers 121 to the light scattering transparent film 115 side is emitted from the first surface 114a of the light scattering transparent film 115 in a different direction from the incidence direction of the incident light 131. Thus, since the incidence direction of the incident light 131 and the emission direction of the refracted light 134 differ due to the fillers 121 and the metal vapor-deposited film 113 within the light scattering transparent film 115, light is scattered about in the light scattering transparent film 115. As a result, glare due to reflection of light in the metal vapor-deposited film 113 is inhibited, and a mat feeling is obtained.

In the decorative member 110 having such configuration, the 60-degree relative-specular glossiness that is measured at the light scattering transparent film 115 side is, in terms of gloss units, preferably 40 or more and 400 or less, and more preferably 50 or more and 150 or less.
If the 60-degree relative-specular glossiness converted into the gloss units is 40 or more and 400 or less, a high-class look resulting from the mat feeling that was not obtained in a conventional configuration is obtained in the decorative member 110. Moreover, when the 60-degree relative-specular glossiness that is measured at the light scattering transparent film 115 side of the decorative member 110 is, in terms of gloss units, less than 40, the desired mat feeling (high-class look) may not be obtained. On the other hand, when the 60-degree relative-specular glossiness at the light scattering transparent film 115 side of the decorative member 110, in terms of gloss units, exceeds 400 where the gloss becomes too strong, there is a risk that the desired mat feeling (high-class look) may not be obtained.
The reason that the 60-degree relative-specular glossiness converted to gloss units is more preferably 50 or more and 150 or less is that a stable mat feeling (high-class look) is obtained.

According to the decorative member 110, since the light scattering transparent film 115 is laminated via the transparent film 114 on the base material 111 and the undercoat film 112 and the metal vapor-deposited film 113 that are provided in that order on the first surface 111a of the base material 111, the perspiration resistance of the decorative member 110 improves. Since two or more types of fillers having light transmissive properties and light scattering properties are dispersed in the light scattering transparent film 115, that is, since fillers with different shapes and refractive indices are mixed in the light scattering transparent film 115, these fillers are randomly oriented without facing in a uniform direction. For that reason, light that has entered from the upper surface of the light scattering transparent film 115 is refracted by the fillers in the light scattering transparent film 115, and is scattered in all directions. The scattered light is reflected by the metal vapor-deposited film 113, and that reflected light is scattered in all directions by the fillers in the light scattering transparent film 115, and again emitted to the outside from the light scattering transparent film 115. Moreover, since two or more types of fillers are mixed, aggregation of the same filler particles decreases, and the fillers are dispersed throughout the light scattering transparent film 115. Further, since the dispersion amount of the fillers in the light scattering transparent film 115 is 0.2% to 4.0% by mass ratio, the fillers are substantially uniformly dispersed throughout the light scattering transparent film 115. Therefore, the light is scattered uniformly, and the desired uniform mat feeling (high-class look) is obtained even when viewed from any direction. Accordingly, the decorative member 110 with a beautiful appearance having a metallic tone with a good texture, providing a high-class look with a delustered state and appropriate mat feeling, and having excellent perspiration resistance is obtained, and not merely a glittering luster such as a metallic luster.

Note that the present embodiment illustrated the decorative member 110 that is provided with the undercoat film 112, the metal vapor-deposited film 113, the transparent film 114 and the light scattering transparent film 115 that are provided in that order on the first surface 111a of the base material 111, but the decorative member of the present invention is not limited thereto. In the decorative member of the present invention, the aforementioned effect is exhibited even if the metal vapor-deposited film 113 is directly provided on the base material 111 with the undercoat film 112 being omitted.

### [Manufacturing Method of Decorative Member]

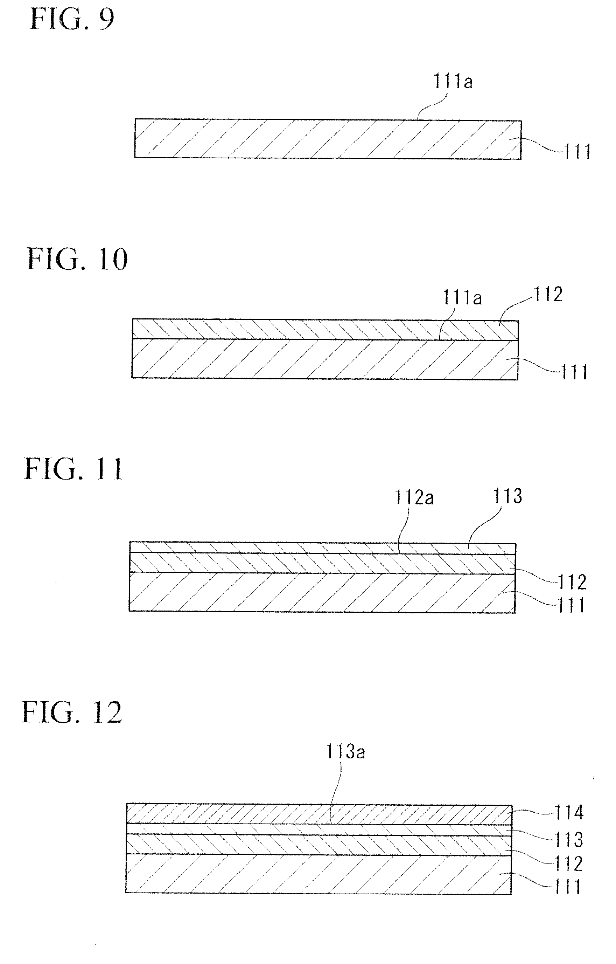

With reference to FIGS. 9 to 13, the manufacturing method of the decorative member according to the present embodiment shall be described.
First, as shown in FIG. 9, the base material 111 that is formed in a predetermined shape is prepared by extrusion molding or injection molding.

Subsequently, as shown in FIG. 10, a coating material that includes a resin such as an acrylic resin, a urethane resin, an epoxy resin, or a vinyl resin is applied to the first surface 111a of the base material 111 by a robotic spray method or a spindle spray method, and the coating material is cured to form the undercoat film 112.
For example, in the case of using an ultraviolet curable coating material as the acrylic resin coating material, in order to cure the ultraviolet curable coating material, after performing preliminary drying of the base material 111 that is coated with the acrylic resin coating material at a temperature of 40°C for two minutes, the ultraviolet curable coating material is irradiated with ultraviolet light. The peak intensity of the ultraviolet light that are irradiated on the ultraviolet curable coating material is, for example, 105.0 mW/cm², and the integrated quantity of light of the ultraviolet light is, for example, 1239.0 mJ/cm².
In the case of using a thermosetting coating material as the urethane resin coating material, in order to cure the thermosetting coating material, the base material 111 which is coated with the urethane resin coating material is dried for 90 minutes at a temperature of 80°C.

Subsequently, as shown in FIG. 11, the metal vapor-deposited film 113 that is constituted from one type selected from the group of base metals, such as tin (Sn), aluminum (Al), and indium (In), and its oxide is formed by a vapor deposition method on the first surface 112a on the undercoat film 112.
Although a vacuum deposition method that utilizes a resistance wire heating system, a sputtering method or the like is used as the vapor deposition method, the vacuum deposition method that utilizes a resistance wire heating system is preferable in consideration of its operability and the controllability of the thickness of the metal vapor-deposited film 113.

Subsequently, as shown in FIG. 12, a coating material that includes a resin such as a vinyl resin, an acrylic resin, a urethane resin, an epoxy resin is applied to the first surface 113a of the non-conductive vapor-deposited layer 113 by the robotic spray method or the spindle method, and the coating material is cured to form the transparent film 114.
For example, in order to cure the ultraviolet curable vinyl resin coating material, after performing preliminary drying of the base material 111 that is coated with the vinyl resin coating material at a temperature of 60°C for three minutes, the vinyl resin coating material is irradiated with ultraviolet light. The peak intensity of the ultraviolet light that are irradiated on the vinyl resin coating material is, for example, 105.0 mW/cm², and the integrated quantity of light of the ultraviolet light is, for example, 840.0 mJ/cm².

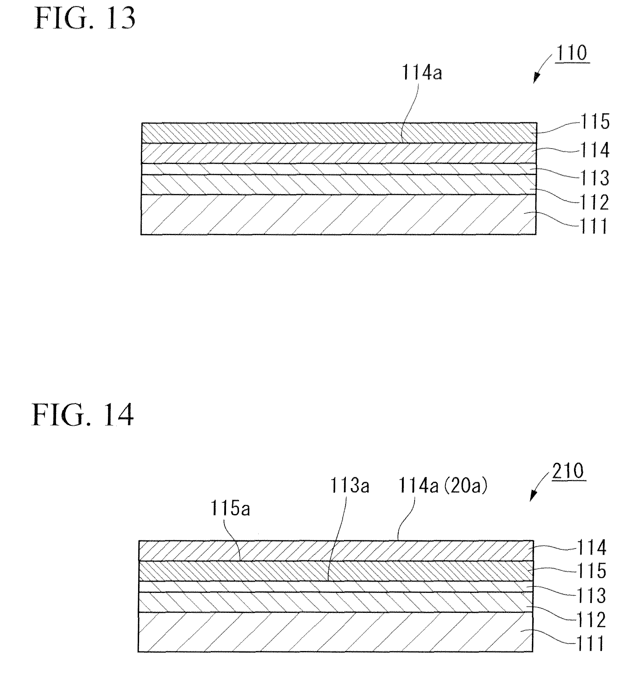

Subsequently, as shown in FIG. 13, a coating material that includes a resin such as an acrylic resin, a urethane resin, an epoxy resin, or a vinyl resin is applied to the first surface 114a of the transparent film 114 by a robotic spray method or a spindle spray method, and the coating material is cured to form the light scattering transparent film 115, whereby the decorative member 110 is obtained.
For example, in order to cure the ultraviolet curable acrylic resin coating material, after performing preliminary drying of the base material 111 that is coated with the acrylic resin coating material at a temperature of 60°C for three minutes, the acrylic resin coating material is irradiated with ultraviolet light. The peak intensity of the ultraviolet light that are irradiated on the acrylic resin coating material is, for example, 105.0 mW/cm², and the integrated quantity of light of the ultraviolet light is, for example, 1239.0 mJ/cm².

### (3) Third Embodiment

### "Decorative Member"

FIG. 14 is a schematic sectional view that shows the decorative member according to the third embodiment of the present invention.
In FIG. 14, constituent elements that are the same as those in the decorative member 110 shown in FIG. 7 shall be denoted by the same reference numerals, and descriptions thereof shall be omitted.
The decorative member 120 of the present embodiment differs from the decorative member 110 of the aforementioned second embodiment on the point of the light scattering transparent film 115 being provided on the first surface 113a of the metal vapor-deposited film 113, and the transparent film 114 being provided on the surface (hereinbelow referred to as the "first surface") 115a of the light scattering transparent film 115 being opposite to the surface that is in contact with the metal vapor-deposited film 113.
The decorative member 120 is used as a member that constitutes a portion or the entirety of the main body of a digital consumer product such as a digital still camera and a digital video camera, and the transparent film 114 is arranged at the outermost surface.

Even in the decorative member 120, the phenomenon of scattering of light by fillers with light transmissive properties and light scattering properties occurs in the light scattering transparent film 115 similarly to the aforedescribed decorative member 110. Therefore, light scatters in the light scattering transparent film 115, and as a result, glare due to reflection of light in the metal vapor-deposited film 113 is suppressed, and a mat feeling is obtained.

In the decorative member 120 having such configuration, the 60-degree relative-specular glossiness that is measured from the transparent film 114 side is, in terms of gloss units, preferably 40 or more and 400 or less, and more preferably 50 or more and 150 or less.
Here, relative-specular glossiness converted to gloss units is a value obtained by measuring, with a glossmeter, light (reflected light) that has been incident on the decorative member 120 from the outer surface 120a of the decorative member 120 (the first surface 114a of the light scattering transparent film 114), and then reflected by the fillers present in the light scattering transparent film 115.
If the 60-degree relative-specular glossiness converted into the gloss units is 40 or more and 400 or less, a high-class look resulting from the mat feeling that was not obtained in a conventional configuration is obtained in the decorative member 120. Moreover, when the 60-degree relative-specular glossiness measured from the transparent film 114 side of the decorative member 120 is, in terms of gloss units, less than 40, the desired mat feeling (high-class look) may not be obtained. On the other hand, when the 60-degree relative-specular glossiness at the transparent film 114 side of the decorative member 110, in terms of gloss units, exceeds 400, since the gloss becomes too strong, there is a risk that the desired mat feeling (high-class look) may not be obtained.
The reason that the 60-degree relative-specular glossiness converted to gloss units is more preferably 50 or more and 150 or less is that a stable mat feeling (high-class look) is obtained.

Since the decorative member 120 is the light scattering transparent film 120 that has the base material 111, and the undercoat film 112, the metal vapor-deposited film 113, the light scattering transparent film 115, and the transparent film 114 that are provided on the first surface 111a of the base material 111 in that order, the transparent film 114 protects the light scattering transparent film 115, and the perspiration resistance of the decorative member 120 improves. Since two or more types of fillers having light transmissive and light scattering properties are dispersed in the light scattering transparent film 115, that is, since fillers with different shapes and refractive indices are mixed in the light scattering transparent film 115, these fillers are randomly oriented without facing in a uniform direction. For that reason, light that has entered from the upper surface of the light scattering transparent film 115 is refracted by the fillers in the light scattering transparent film 115, and is scattered in all directions. The scattered light is reflected by the metal vapor-deposited film 113, and that reflected light is scattered in all directions by the fillers in the light scattering transparent film 115, and again emitted to the outside from the light scattering transparent film 115. Moreover, since two or more types of fillers are mixed, aggregation of the same filler particles decreases, and the fillers are dispersed throughout the light scattering transparent film 115. Further, since the dispersion amount of the fillers in the light scattering transparent film 115 is 0.2% to 4.0% by mass ratio, the fillers are substantially uniformly dispersed throughout the light scattering transparent film 115. Therefore, the light is scattered uniformly, and the desired uniform mat feeling (high-class look) is obtained even when viewed from any direction. Accordingly, the decorative member 120 with a beautiful appearance having a metallic tone with a good texture, providing a high-class look with a delustered state and appropriate mat feeling, and having excellent perspiration resistance is obtained, and not merely a glittering luster such as a metallic luster.

Note that the present embodiment illustrated the decorative member 120 that is provided with the undercoat film 112, the metal vapor-deposited film 113, the light scattering transparent film 115 and the transparent film 114 that are provided in that order on the first surface 111a of the base material 111, but the decorative member of the present invention is not limited thereto. In the decorative member of the present invention, the aforementioned effect is exhibited even if the metal vapor-deposited film is directly provided on the base material with the undercoat film omitted.

### [Manufacturing Method of Decorative Member]

With reference to FIGS. 9 to 11 and FIG. 14, the manufacturing method of the decorative member of the present embodiment shall be described.
Similarly to the second embodiment described above, the undercoat film 112 and the metal vapor-deposited film 113 are formed in that order on the first surface 111a of the base material 111.

Subsequently, an ultraviolet curable acrylic resin coating material is applied by a robotic spray method or a spindle spray method to the first surface 113a of the metal vapor-deposited film 113, and the acrylic resin coating material is cured to form the light scattering transparent film 115.
In order to cure the ultraviolet curable acrylic resin coating material, after performing preliminary drying of the base material 111 that is coated with the acrylic resin coating material at a temperature of 60°C for three minutes, the acrylic resin coating material is irradiated with ultraviolet light. The peak intensity of the ultraviolet light that are irradiated on the acrylic resin coating material is, for example, 105.0 mW/cm², and the integrated quantity of light of the ultraviolet light is, for example, 1239.0 mJ/cm².

Next, an ultraviolet curable vinyl resin coating material is applied by a robotic spray method or a spindle spray method to the first surface 115a of the light scattering transparent film 115, and the vinyl resin coating material is cured to form the transparent film 114 and obtain the decorative member 120.
In order to cure the ultraviolet curable vinyl resin coating material, after performing preliminary drying of the base material 111 that is coated with the vinyl resin coating material at a temperature of 60°C for three minutes, the vinyl resin coating material is irradiated with ultraviolet light. The peak intensity of the ultraviolet light that are irradiated on the vinyl resin coating material is, for example, 105.0 mW/cm², and the integrated quantity of light of the ultraviolet light is, for example, 840.0 mJ/cm².

Hereinbelow, the present invention shall be described more specifically with examples and comparative examples, but the present invention is not to be considered as limited to the following examples.

### [Example 17]

An ultraviolet curable coating material: VB3025U (trade name, made by Fujikura Kasei Co.) that includes AD2986D (trade name, made by Fujikura Kasei Co.) as an additive was applied to the first surface of a base material that consists of ABS resin that is formed in a predetermined shape by injection molding with a surface texturing process performed on the surface. After performing preliminary drying of the base material that is coated with the ultraviolet curable coating material at a temperature of 40°C for two minutes, the ultraviolet curable coating material is irradiated with ultraviolet light, and the ultraviolet curable coating material was cured to form an undercoat with a thickness of 10 µm. The peak intensity of the ultraviolet light that were irradiated on the ultraviolet curable coating material was, for example, 105.0 mW/cm², and the integrated quantity of light of the ultraviolet light was, for example, 1239.0 mJ/cm².
Next, a metal vapor-deposited film that consists of tin with a thickness of 100 nm was formed by a vacuum deposition method that utilizes a resistance wire heating system on the surface of the undercoat film being opposite to the surface that is in contact with the base material.
Next, on the surface of the metal vapor-deposited film being opposite to the surface that is in contact with the undercoat film, the ultraviolet curable coating material VM5484U (trade name, made by Fujikura Kasei Co.) that includes the dilution agent VM5584 CN-AD (trade name, made by Fujikura Kasei Co.) was applied by a robotic spray method. After performing preliminary drying of the base material that is coated with the ultraviolet curable coating material at a temperature of 60°C for three minutes, the ultraviolet curable coating material was irradiated with ultraviolet light. By curing the ultraviolet curable coating material, a transparent film with a thickness of 10 µm was formed. The peak intensity of the ultraviolet light that were irradiated on the ultraviolet curable coating material was 105.0 mW/cm², and the integrated quantity of light of the ultraviolet light was 840.0 mJ/cm².
Next, on the surface of the transparent film being opposite to the surface that is in contact with the metal vapor-deposited film, the ultraviolet curable coating material VT9269U (trade name, made by Fujikura Kasei Co.) that includes the dilution agent VM5584 CN-AD (trade name, made by Fujikura Kasei Co.) in addition to including a mixture of scaly talc with an average secondary particle diameter of 10 nm and fibrous silica with an average secondary particle diameter of 0.5 nm as fillers was applied by a robotic spray method. After performing preliminary drying of the base material that is coated with the ultraviolet curable coating material at a temperature of 60°C for three minutes, the ultraviolet curable coating material was irradiated with ultraviolet light. By curing the ultraviolet curable coating material, a light scattering transparent film with a thickness of 10 µm was formed, and the sample of Example 17 was manufactured. The peak intensity of the ultraviolet light that were irradiated on the ultraviolet curable coating material was, for example, 105.0 mW/cm², and the integrated quantity of light of the ultraviolet light was, for example, 1239.0 mJ/cm².
The dispersion amount of the fillers in the light scattering transparent film was 0.2% in mass ratio.

### [Example 18]

Using a mixture of scaly talc with an average secondary particle diameter of 10 nm and fibrous silica with an average secondary particle diameter of 0.5 nm as fillers, a sample of Example 18 was manufactured in the same manner as Example 17, with the exception that the dispersion amount of the fillers in the light scattering transparent film was 0.5% in mass ratio.

### [Example 19]

Using a mixture of scaly talc with an average secondary particle diameter of 10 nm and fibrous silica with an average secondary particle diameter of 0.5 nm as fillers, a sample of Example 19 was manufactured in the same manner as Example 17, with the exception that the dispersion amount of the fillers in the light scattering transparent film was 0.75% in mass ratio.

### [Example 20]

Using a mixture of scaly talc with an average secondary particle diameter of 10 nm and fibrous silica with an average secondary particle diameter of 0.5 nm as fillers, a sample of Example 20 was manufactured in the same manner as Example 17, with the exception that the dispersion amount of the fillers in the light scattering transparent film was 1.0% in mass ratio.

### [Example 21]

Using a mixture of scaly talc with an average secondary particle diameter of 10 nm and fibrous silica with an average secondary particle diameter of 0.5 nm as fillers, a sample of Example 21 was manufactured in the same manner as Example 17, with the exception that the dispersion amount of the fillers in the light scattering transparent film was 1.5% in mass ratio.

### [Example 22]

Using a mixture of scaly talc with an average secondary particle diameter of 10 nm and fibrous silica with an average secondary particle diameter of 0.5 nm as fillers, a sample of Example 22 was manufactured in the same manner as Example 17, with the exception that the dispersion amount of the fillers in the light scattering transparent film was 2.0% in mass ratio.

### [Example 23]

Using a mixture of scaly talc with an average secondary particle diameter of 10 nm and fibrous silica with an average secondary particle diameter of 0.5 nm as fillers, a sample of Example 23 was manufactured in the same manner as Example 17, with the exception that the dispersion amount of the fillers in the light scattering transparent film was 2.5% in mass ratio.

### [Example 24]

Using a mixture of scaly talc with an average secondary particle diameter of 10 nm and fibrous silica with an average secondary particle diameter of 0.5 nm as fillers, a sample of Example 24 was manufactured in the same manner as Example 17, with the exception that the dispersion amount of the fillers in the light scattering transparent film was 3.0% in mass ratio.

### [Example 25]

Using a mixture of scaly talc with an average secondary particle diameter of 10 nm and fibrous silica with an average secondary particle diameter of 0.5 nm as fillers, a sample of Example 25 was manufactured in the same manner as Example 17, with the exception that the dispersion amount of the fillers in the light scattering transparent film was 4.0% in mass ratio.

### [Comparative Example 6]

Using a mixture of scaly talc with an average secondary particle diameter of 10 nm and fibrous silica with an average secondary particle diameter of 0.5 nm as fillers, a sample of Comparative Example 6 was manufactured in the same manner as Example 17, with the exception that the dispersion amount of the fillers in the light scattering transparent film was 0.1% in mass ratio.

### [Comparative Example 7]

Using a mixture of scaly talc with an average secondary particle diameter of 10 nm and fibrous silica with an average secondary particle diameter of 0.5 nm as fillers, a sample of Comparative Example 7 was manufactured in the same manner as Example 17, with the exception that the dispersion amount of the fillers in the light scattering transparent film was 4.2% in mass ratio.

### [Comparative Example 8]

Using only scaly talc with an average secondary particle diameter of 10 nm as a filler, a sample of Comparative Example 8 was manufactured in the same manner as Example 17, with the exception that the dispersion amount of the filler in the light scattering transparent film was 0.75% in mass ratio.

### [Comparative Example 9]

Using only fibrous silica with an average secondary particle diameter of 0.5 nm as the filler, a sample of Comparative Example 9 was manufactured in the same manner as Example 17, with the exception that the dispersion amount of the filler in the light scattering transparent film was 0.75% in mass ratio.

### [Comparative Example 10]

Using only spherical zeolite with an average secondary particle diameter of 10 nm as the filler, a sample of Comparative Example 10 was manufactured in the same manner as Example 17, with the exception that the dispersion amount of the filler in the light scattering transparent film was 0.75% in mass ratio.

### [Example 26]

Using a mixture of spherical zeolite with an average secondary particle diameter of 10 nm and fibrous aluminosilicate with an average secondary particle diameter of 0.5 nm as the fillers, a sample of Example 26 was manufactured in the same manner as Example 17, with the exception that the dispersion amount of the fillers in the light scattering transparent film was 0.75% in mass ratio.

### [Example 27]

Using a mixture of mica with an average secondary particle diameter of 10 nm and fibrous silica with an average secondary particle diameter of 0.5 nm as the fillers, a sample of Example 27 was manufactured in the same manner as Example 17, with the exception that the dispersion amount of the fillers in the light scattering transparent film was 0.75% in mass ratio.

### [Example 28]

Using a mixture of scaly talc with an average secondary particle diameter of 10 nm and fibrous silica with an average secondary particle diameter of 0.5 nm as fillers, a sample of Example 28 was manufactured in the same manner as Example 17, with the exception that the dispersion amount of the fillers in the light scattering transparent film was 0.75% in mass ratio and the thickness of the light scattering transparent film was 1 µm.

### [Example 29]

Using a mixture of scaly talc with an average secondary particle diameter of 10 nm and fibrous silica with an average secondary particle diameter of 0.5 nm as fillers, a sample of Example 29 was manufactured in the same manner as Example 17, with the exception that the dispersion amount of the fillers in the light scattering transparent film was 0.75% in mass ratio and the thickness of the light scattering transparent film was 3 µm.

### [Example 30]

Using a mixture of scaly talc with an average secondary particle diameter of 10 nm and fibrous silica with an average secondary particle diameter of 0.5 nm as fillers, a sample of Example 30 was manufactured in the same manner as Example 17, with the exception that the dispersion amount of the fillers in the light scattering transparent film was 0.75% in mass ratio and the thickness of the light scattering transparent film was 5 µm.

### [Example 31]

Using a mixture of scaly talc with an average secondary particle diameter of 10 nm and fibrous silica with an average secondary particle diameter of 0.5 nm as fillers, a sample of Example 31 was manufactured in the same manner as Example 17, with the exception that the dispersion amount of the fillers in the light scattering transparent film was 0.75% in mass ratio and the thickness of the light scattering transparent film was 15 µm.

### [Example 32]

Using a mixture of scaly talc with an average secondary particle diameter of 10 nm and fibrous silica with an average secondary particle diameter of 0.5 nm as fillers, a sample of Example 32 was manufactured in the same manner as Example 17, with the exception that the dispersion amount of the fillers in the light scattering transparent film was 0.75% in mass ratio and the thickness of the light scattering transparent film was 18 µm.

### [Example 33]

Using a mixture of scaly talc with an average secondary particle diameter of 10 nm and fibrous silica with an average secondary particle diameter of 0.5 nm as fillers, a sample of Example 33 was manufactured in the same manner as Example 17, with the exception that the dispersion amount of the fillers in the light scattering transparent film was 0.75% in mass ratio and the thickness of the transparent film was 3 µm.

### [Example 34]

Using a mixture of scaly talc with an average secondary particle diameter of 10 nm and fibrous silica with an average secondary particle diameter of 0.5 nm as fillers, a sample of Example 34 was manufactured in the same manner as Example 17, with the exception that the dispersion amount of the fillers in the light scattering transparent film was 0.75% in mass ratio and the thickness of the transparent film was 4 µm.

### [Example 35]

Using a mixture of scaly talc with an average secondary particle diameter of 10 nm and fibrous silica with an average secondary particle diameter of 0.5 nm as fillers, a sample of Example 35 was manufactured in the same manner as Example 17, with the exception that the dispersion amount of the fillers in the light scattering transparent film was 0.75% in mass ratio and the thickness of the transparent film was 5 µm.

### [Example 36]

Using a mixture of scaly talc with an average secondary particle diameter of 10 nm and fibrous silica with an average secondary particle diameter of 0.5 nm as fillers, a sample of Example 36 was manufactured in the same manner as Example 17, with the exception that the dispersion amount of the fillers in the light scattering transparent film was 0.75% in mass ratio and the thickness of the transparent film was 8 µm.

### [Example 37]

Using a mixture of scaly talc with an average secondary particle diameter of 10 nm and fibrous silica with an average secondary particle diameter of 0.5 nm as fillers, a sample of Example 37 was manufactured in the same manner as Example 17, with the exception that the dispersion amount of the fillers in the light scattering transparent film was 0.75% in mass ratio and the thickness of the transparent film was 12 µm.

### [Example 38]

Using a mixture of scaly talc with an average secondary particle diameter of 10 nm and fibrous silica with an average secondary particle diameter of 0.5 nm as fillers, a sample of Example 38 was manufactured in the same manner as Example 17, with the exception that the dispersion amount of the fillers in the light scattering transparent film was 0.75% in mass ratio and the thickness of the transparent film was 15 µm.

### [Evaluation of the Samples]

The mat feeling and perspiration resistance of the samples of the Examples 17 to 38 and Comparative Examples 6 to 10 were evaluated.
The evaluation method is as given below.

### <1> Mat feeling (Gloss unit)

With respect to the samples of Example 17 and Comparative Examples 6 and 2, the relative-specular glossiness (gloss unit) of each sample was obtained by measuring, with a glossmeter, light (reflected light) that had been incident on each sample from its light scattering transparent film or the top coat film side at an incident angle of 60 degrees and then reflected by the sample.
Here, when the gloss unit was 40 or more and 400 or less, the mat feeling was evaluated as "good", when the gloss unit was 50 or more and 150 or less, the mat feeling was evaluated as "excellent", and when the gloss unit was less than 40 or exceeded 400, the mat feeling was evaluated as "bad".
The results are shown in Tables 4 to 6.

### <2> Perspiration Resistance

With regard to the samples of Examples 17 to 38 and Comparative Examples 6 to 10, after dropping several drops of artificial perspiration (containing L-histidine hydrochloride monohydrate and sodium chloride as essential components) on the outer surface 10a of the decorative member 10 serving as the sample, the decorative member 10 was left in an environment with a temperature of 65°C and humidity of 95% RH for 48 hours. Light (reflected light) was measured with a glossmeter, the light having been incident at an incident angle of 60 degrees from the top coat film side on each of the portion where several drops of the artificial perspiration were dropped and the portion where it was not dropped, and then reflected by the sample. The difference in gloss units obtained from the measurement was calculated, and in the case of the difference being less than 3, the perspiration resistance was referred to as "Excellent", if the difference was 3 or more and less than 5, the perspiration resistance was referred to as "Good", and if the difference was 5 or more and less than 10, the perspiration resistance was referred to as "Poor".
The results are shown in Tables 4 to 6.

**[Table 4]**

| | Filler Dispersion Amount (mass%) | Filler A | | Filler B | | Thickness of Light Scattering Transparent Film (µm) | Thickness of Transparent Film (µm) | Mat feeling (Gloss Unit) | Perspiration Resistance |
|---|---|---|---|---|---|---|---|---|---|
| | | Type | Avg. Secondary Particle Diameter (nm) | Type | Avg. Secondary Particle Diameter (nm) | | | | |
| Example 17 | 0.2 | Scaly talc | 10 | Fibrous silica | 0.5 | 10 | 10 | Good | Excellent |
| Example 18 | 0.5 | Scaly talc | 10 | Fibrous silica | 0.5 | 10 | 10 | Excellent | Excellent |
| Example 19 | 0.75 | Scaly talc | 10 | Fibrous silica | 0.5 | 10 | 10 | Excellent | Excellent |
| Examples 20 | 1.0 | Scaly tale | 10 | Fibrous silica | 0.5 | 10 | 10 | Excellent | Excellent |
| Example 21 | 1.5 | Scaly talc | 10 | Fibrous silica | 0.5 | 10 | 10 | Good | Excellent |
| Examples 22 | 2.0 | Scaly talc | 10 | Fibrous silica | 0.5 | 10 | 10 | Good | Excellent |
| Example 23 | 2.5 | Scaly talc | 10 | Fibrous silica | 0.5 | 10 | 10 | Good | Good |
| Examples 24 | 3.0 | Scaly tale | 10 | Fibrous silica | 0.5 | 10 | 10 | Good | Good |
| Examples 25 | 4.0 | Scaly talc | 10 | Fibrous silica | 0.5 | 10 | 10 | Good | Good |

**[Table 5]**

| | Filler Dispersion Amount (mass %) | Filler A | | Filler B | | Thickness of Light Scattering Transparent Film (µm) | Thickness of Transparent Film µm | Mat feeling (Gloss Unit) | Perspiration Resistance |
|---|---|---|---|---|---|---|---|---|---|
| | | Type | Avg_{.} Secondary Particle Diameter (nm) | Type | Avg. Secondary Particle Diameter (nm) | | | | |
| Comparative Example 6 | 0.1 | Scaly talc | 10 | Fibrous | 0.5 | 10 | 10 | Bad | Excellent |
| Comparative Example 7 | 4.2 | Scaly talc | 10 | Fibrous silica | 0.5 | 10 | 10 | Bad | Poor |
| Comparative Example 8 | 0.75 | Scaly talc Scaly talc | 10 | - | - | 10 | 10 | Bad | Excellent |
| Comparative Example 9 | 0.75 | Fibrous 10 silica | 10 | - | - | 10 | 10 | Bad | Excellent |
| Comparative Example 10 | 0.75 | Spherical zeolite | 10 | | | 10 | 10 | Bad | Excellent |

**[Table 6]**

| | Filler Dispersion Amount (mass%) | Filler A | | Filler B | | Thickness of Light Scattering Transparent Film (µm) | Thickness of Transparent Film(µm) | Mat feeling (Gloss Unit) | Perspiration Resistance |
|---|---|---|---|---|---|---|---|---|---|
| | | Type | Avg. Secondary Particle Diameter (nm) | Type | Avg. Secondary Particle Diameter (nm) | | | | |
| Example 26 | 0.75 | Spherical zeolite | 10 | Fibrous aluminosilicate | 0.5 | 10 | 10 | Excellent | Excellent |
| Example 27 | 0.75 | Mica | 10 | Fibrous silica | 0.5 | 10 | 10 | Excellent | Excellent |
| Example 28 | 0.75 | Scaly talc | 10 | Fibrous silica | 0.5 | 1 | 10 | Good | Good |
| Example 29 | 0.75 | Scaly talc | 10 | Fibrous silica | 0.5 | 3 | 10 | Excellent | Excellent |
| Example 30 | 0.75 | Scaly talc | 10 | Fibrous silica | 0.5 | 5 | 10 | Excellent | Excellent |
| Example 31 | 0.75 | Scaly talc | 10 | Fibrous silica | 0.5 | 15 | 10 | Excellent | Excellent |
| Example 32 | 0.75 | Scaly talc | 10 | Fibrous silica | 0.5 | 18 | 10 | Good | Excellent |
| Example 33 | 0.75 | Scaly talc | 10 | Fibrous silica | 0.5 | 10 | 3 | Excellent | Good |
| Example 34 | 0.75 | Scaly talc | 10 | Fibrous silica | 0.5 | 10 | 4 | Excellent | Excellent |
| Example 35 | 0.75 | Scaly talc | 10 | Fibrous silica | 0.5 | 10 | 5 | Excellent | Excellent |
| Example 36 | 0.75 | Scaly talc | 10 | Fibrous silica | 0.5 | 10 | 8 | Excellent | Excellent |
| Example 37 | 0.75 | Scaly talc | 10 | Fibrous silica | 0.5 | 10 | 12 | Excellent | Excellent |
| Example 38 | 0.75 | Scaly talc | 10 | Fibrous silica | 0.5 | 10 | 15 | Excellent | Excellent |

From the results as shown in Table 4 and Table 5, it is confirmed the samples of Examples 17 to 38 have excellent mat feeling and perspiration resistance.
Moreover, provided the dispersion amount of the fillers is 0.5 mass% or more and 1.0 mass% or less, the thickness of the light scattering transparent layer is 10 µm, and the thickness of the transparent film is 4 µm or more, it is confirmed that the mat feeling and perspiration resistance are extremely excellent for whichever fillers are used in the Examples 17 to 38.
Moreover, from the result of Table 5, it is found that the samples of Comparative Example 6 and Comparative Examples 8 to 10 have excellent perspiration resistance, but inferior mat feeling.
Moreover, it is found that the sample of Comparative Example 7 have inferior mat feeling and perspiration resistance.

### INDUSTRIAL APPLICABILITY

According to the present invention, it is possible to provide a decorative member that offers a high-class look, has a metallic external appearance with a good texture, and has excellent perspiration resistance.

### DESCRIPTION OF THE REFERENCE SYMBOLS

- 10: decorative member
- 11: base material
- 12: undercoat film
- 13: metal vapor-deposited film
- 14: light scattering transparent film
- 110: decorative member
- 111: base material
- 112: undercoat film
- 113: metal vapor-deposited film
- 114: transparent film
- 115: light scattering transparent film

## Claims

1. A decorative member comprising:
a base material;
a metal vapor-deposited film that is provided on the base material; and
a light scattering transparent film that is provided on the metal vapor-deposited film, wherein
two or more types of fillers having light transmissive properties and light scattering properties are dispersed within the light scattering transparent film, and
the dispersion amount of the fillers in the light scattering transparent film is 0.2 to 4.0% by mass.

2. The decorative member according to claim 1, wherein the two or more types of fillers having light transmissive properties and light scattering properties are a mixture of two or more types among scaly talc, fibrous silica, spherical zeolite, mica, and fibrous aluminosilicate.

3. The decorative member according to claim 1 or claim 2, wherein the 60-degree relative-specular glossiness, converted to gloss units, is 40 to 400.

4. The decorative member according to claims 1 to 3, wherein the film thickness of the light scattering transparent film is 3 to 15 µm.

5. The decorative member according to claims 1 to 4, further comprising a transparent film between the metal vapor-deposited film and the light scattering transparent film, or on the light scattering transparent film.
